# EUROPÄISCHE PATENTSCHRIFT

(11) **EP 3 767 145 B1**
(45) Veröffentlichungstag und Bekanntmachung des Hinweises auf die Patenterteilung: **15.03.2023**
(21) Anmeldenummer: 20186353.7
(22) Anmeldetag: 17.07.2020
(51) Int. Cl.: F16L 5/02, F16L 21/04

(54) **SPREIZANORDNUNG FÜR EINE RINGDICHTUNG ZUM ABDICHTEN EINES RINGSPALTS**
EXPANSION DEVICE FOR AN ANNULAR SEAL FOR SEALING AN ANNULAR GAP
AGENCEMENT D'ÉCARTEMENT POUR UN JOINT D'ÉTANCHÉITÉ ANNULAIRE PERMETTANT D'ÉTANCHÉIFIER UNE FENTE ANNULAIRE

(30) Priorität: 18.07.2019 DE 102019119574
(43) Veröffentlichungstag der Anmeldung: 20.01.2021
(73) Patentinhaber: Felber, Winfried, 86653 Monheim (DE)
(72) Erfinder: Felber, Winfried, 86653 Monheim (DE)
(74) Vertreter: Canzler & Bergmeier Patentanwälte Partnerschaft mbB

(56) Entgegenhaltungen:
- EP-A2- 0 303 044
- EP-B1- 1 948 986
- WO-A1-2008/010755
- DE-U1-202016 106 736
- GB-A- 526 698
- US-A- 2 226 067
- US-B1- 6 394 140

## Beschreibung

Die vorliegende Erfindung betrifft eine Spreizanordnung für eine Ringdichtung zum Abdichten eines Ringspalts mit einem radial inneren ersten Bauteil, das eine Innenanpressfläche aufweist, mit einem radial äußeren zweiten Bauteil, das eine Außenanpressfläche aufweist, und mit einem zwischen diesen beiden Bauteilen ausgebildeten ersten Spreizmechanismus, der eine an einem der beiden Bauteile ausgebildete erste Spreizschräge und ein am anderen Bauteil ausgebildetes, entlang der ersten Spreizschräge bewegbares erstes Spreizelement umfasst, wobei die beiden Bauteile relativ zueinander in Axialrichtung der Spreizanordnung aus einer Montagestellung in eine Spreizstellung verschiebbar sind, wodurch das erste Spreizelement von einem ersten Abschnitt der Führungsschräge in einen zweiten Abschnitt der Führungsschräge verschoben wird und hierdurch ein radialer Abstand zwischen der Innenanpressfläche und der Außenanpressfläche vergrößert wird. Des Weiteren betrifft die Erfindung eine Dichtungsanordnung mit einer besagten Spreizanordnung.

Aus der DE 20 2015 102 252 U1 ist ein Muffenadapter mit einer Dichtung bekannt. Die Dichtung wird dabei von einem Keil und einem Widerlager dadurch aufgespreizt, dass der Keil in das Widerlager getrieben wird. Nachteilig daran ist es, dass die Dichtung nicht zuverlässig aufgespreizt wird.

Aus der DE 20 2016 106 736 U1 ist ebenfalls ein Muffenadapter bekannt. Darin wird ebenfalls ein Widerlager unter einen Keil geschoben, um eine Dichtung aufzuspreizen.

Aufgabe der vorliegenden Erfindung ist es somit, den Stand der Technik zu verbessen.

Die Aufgabe wird gelöst durch eine Spreizanordnung und eine Dichtungsanordnung mit den Merkmalen der unabhängigen Patentansprüche.

Vorgeschlagen wird eine Spreizanordnung für eine Ringdichtung zum Abdichten eines Ringspalts. Der Ringspalt ist beispielsweise zwischen einem Körper, insbesondere einem Rohr oder einer Leitung, und einer Wandbohrung in einer Wand angeordnet. Es ist klar, dass bei diesem Beispiel die Wandbohrung durch die Wand größer ausgebildet werden muss als ein Durchmesser des Rohrs bzw. der Leitung ist. Infolgedessen wird stets der Ringspalt ausgebildet, der abgedichtet werden muss, um beispielsweise einen Wasserfluss durch die Wandbohrung zu verhindern. Der Ringspalt kann alternativ zwischen anderen Bauteilen ausgebildet sein.

Der Ringspalt muss dabei nicht ringförmig sein. Der Ringspalt kann auch in einem gewissen Maße oval oder elliptisch sein, beispielsweise, weil die Wandbohrung durch die Wand herstellungsbedingt nicht kreisförmig ausgebildet werden kann.

Zusätzlich oder alternativ kann auch das Rohr von einem runden Querschnitt abweichen. Das Rohr kann ebenfalls elliptisch oder oval sein.

Zur einfacheren Erklärung der Erfindung wird beispielshaft von einem Ringspalt zwischen einem Rohr und der Wandbohrung in einer Wand gesprochen.

Die Spreizanordnung umfasst ein radial inneres erstes Bauteil, das eine Innenanpressfläche aufweist. Die Innenanpressfläche ist dabei dem Rohr zugewandt. An der Innenanpressfläche kann die Ringdichtung anliegen, wobei die Innenanpressfläche die Ringdichtung an das Rohr presst. Die Innenanpressfläche kann die Ringdichtung radial nach innen pressen.

Außerdem weist die Spreizanordnung ein radial äußeres zweites Bauteil auf, das eine Außenanpressfläche aufweist. Die Außenanpressfläche ist dabei dem Rohr abgewandt. Die Außenanpressfläche ist dabei der Wandbohrung zugewandt. An der Außenanpressfläche kann die Ringdichtung anliegen, wobei die Außenanpressfläche die Ringdichtung in der Wandbohrung gegen die Wand presst. Die Außenanpressfläche kann die Ringdichtung radial nach außen pressen. Beide Bauteile korrespondieren miteinander.

Des Weiteren umfasst die Spreizanordnung einen zwischen diesen Bauteilen ausgebildeten ersten Spreizmechanismus. Der erste Spreizmechanismus umfasst ferner eine an einem der beiden Bauteile ausgebildete erste Spreizschräge und ein am anderen Bauteil ausgebildetes, entlang der ersten Spreizschräge bewegbares erstes Spreizelement. Die erste Spreizschräge kann beispielsweise in Axialrichtung geneigt sein. Die erste Spreizschräge kann in Axialrichtung ansteigen. Die erste Spreizschräge kann sich in Axialrichtung erstrecken.

Zusätzlich oder alternativ kann sich die erste Spreizschräge in Radialrichtung der Spreizanordnung erstrecken.

Ferner sind beide Bauteile relativ zueinander in einer Axialrichtung der Spreizanordnung verschiebbar. Die beiden Bauteile sind somit gegeneinander in einer Axialrichtung der Spreizanordnung verschiebbar. Die beiden Bauteile sind weiterhin aus einer Montagestellung in eine Spreizstellung verschiebbar. In der Montagestellung kann die Spreizanordnung beispielsweise zwischen Rohr und Wand in die Wandbohrung angeordnet werden. In der Spreizstellung dichtet dann die Ringdichtung den Ringspalt ab. In der Spreizstellung presst die Spreizanordnung die Ringdichtung gegen das Rohr und/oder gegen die Wand in der Wandbohrung.

Durch die Verschiebung der Bauteile von der Montagestellung in die Spreizstellung wird das erste Spreizelement von einem ersten Abschnitt der Spreizschräge in einen zweiten Abschnitt der Spreizschräge verschoben. Der erste Abschnitt kann beispielsweise radial innen und der zweite Abschnitt radial außen liegen. Das erste Spreizelement kann somit entlang der Spreizschräge in Radialrichtung verschoben werden.

Hierdurch wird ein radialer Abstand zwischen der Innenanpressfläche und der Außenanpressfläche vergrößert. Infolgedessen wird die Ringdichtung an das Rohr und/oder an die Wand der Wandbohrung gepresst.

Erfindungsgemäß weist die Spreizanordnung einen zwischen diesen beiden Bauteilen ausgebildeten zweiten Spreizmechanismus auf. Mit Hilfe des zweiten Spreizmechanismus kann ebenfalls der radiale Abstand zwischen der Innenanpressfläche und der Außenanpressfläche vergrößert werden.

Außerdem sind die beiden Spreizmechanismen zueinander in Axialrichtung der Spreizanordnung versetzt. Die beiden Spreizmechanismen weisen somit einen Abstand in Axialrichtung auf. Infolgedessen sind die beiden Bauteile in Axialrichtung an zwei unterschiedlichen Orten gegeneinander abgestützt, wenn ihr radialer Abstand vergrößert wird. Dadurch kann beispielsweise verhindert werden, dass beide Bauteile gegeneinander kippen. Die beiden Bauteile können damit über eine Länge in Axialrichtung gleichmäßig im Abstand vergrößert werden. Dadurch kann die Ringdichtung gleichmäßig gegen das Rohr und/oder die Wand gepresst werden.

Vorteilhaft ist es, wenn die beiden Bauteile einen gemeinsamen ersten Abstützbereich, der durch den ersten Spreizmechanismus ausgebildeten ist, und einen zum ersten Abstützbereich in Axialrichtung der Spreizanordnung versetzten zweiten Abstützbereich, der durch den zweiten Spreizmechanismus ausgebildet ist, aufweisen. Dadurch sind die beiden Bauteile an den durch die beiden Abstützbereiche gebildeten Punkte gegeneinander abgestützt. Die Bauteile können dadurch nicht gegeneinander kippen.

Vorteilhaft ist es, wenn die beiden Spreizmechanismen voneinander getrennt sind. Dadurch kann Material zwischen den beiden Spreizmechanismen eingespart werden, so dass die Spreizanordnung insgesamt leichter ausgebildet ist.

Von Vorteil ist es, wenn die beiden Spreizmechanismen zueinander in Radialrichtung der Spreizanordnung versetzt sind.

Vorteilhaft ist es, wenn die Innenanpressfläche und die Außenanpressfläche zueinander parallel sind. Dies ist vorteilhaft, wenn der Rohrabschnitt an dem die Ringdichtung anliegt und der Wandabschnitt in der Wandbohrung, in der die Ringdichtung anliegt, parallel zueinander sind.

Von Vorteil ist es zusätzlich oder alternativ, wenn die beiden Spreizmechanismen derart ausgebildet sind, dass die Innenanpressfläche und die Außenanpressfläche zueinander prallelverschiebbar sind. Dadurch bleibt eine Orientierung der beiden Bauteile zueinander unverändert bzw. gleich. Die Ringdichtung kann dadurch gleichmäßig gegen das Rohr und/oder die Wand gepresst werden.

Der zweite Spreizmechanismus umfasst eine an einem der beiden Bauteile ausgebildete zweite Spreizschräge und ein am anderen Bauteil ausgebildetes, entlang der zweiten Spreizschräge bewegbares zweites Spreizelement. Die zweite Spreizschräge kann sich ferner in Axial- und/oder Radialrichtung erstrecken. Beispielsweise kann die zweite Spreizschräge in Axialrichtung ansteigen. Über die zweite Spreizschräge kann das zweite Spreizelement verschoben werden, so dass ein radialer Abstand zwischen beiden Bauteilen vergrößert wird, wobei infolgedessen auch der radiale Abstand zwischen Innen- und Außenanpressfläche vergrößert wird.

Von Vorteil ist es, wenn eines der beiden Bauteile die beiden Spreizschrägen und das andere der beiden Bauteile die beiden Spreizelemente aufweist. Die beiden Spreizschrägen sind somit an einem Bauteil angeordnet. Die Spreizelemente sind somit an dem entsprechend anderen Bauteil angeordnet.

Vorteilhaft ist es, wenn jeweils eines der beiden Bauteile die Spreizschräge des einen Spreizmechanismus und das Spreizelement des anderen Spreizmechanismus aufweist.

Von Vorteil ist es, wenn die Spreizschrägen der beiden Spreizmechanismen zueinander in Axialrichtung versetzt sind.

Zusätzlich oder alternativ können auch die Spreizelemente der beiden Spreizmechanismen zueinander in Axialrichtung der Spreizanordnung versetzt sind.

Zusätzlich oder alternativ können auch die Spreizschrägen der beiden Spreizmechanismen zueinander in Radialrichtung der Spreizanordnung versetzt sein.

Zusätzlich oder alternativ können auch die Spreizelemente der beiden Spreizmechanismen zueinander in Radialrichtung der Spreizanordnung versetzt sein.

Vorteilhaft ist es, wenn die Spreizschrägen der beiden Spreizmechanismen zueinander parallelversetzt sind. Dabei kann ein Verschiebungsvektor, um welchen die beiden Spreizschrägen parallelversetzt sind, parallel zur Axialrichtung ausgerichtet sein. Die beiden Spreizschrägen können einen Versatz aufweisen, wobei beide Spreizschrägen parallel zueinander versetzt sind. Dadurch können die beiden Spreizmechanismen in Axialrichtung versetzt sein. Dadurch können die beiden Abstützpunkte der beiden Bauteile gegeneinander und in Axialrichtung beabstandet ausgebildet werden. Ferner ist bei kompakter Bauweise die Möglichkeit gegeben, den radialen Abstand zwischen der Innen- und Außenanpressfläche zu vergrößern.

Von Vorteil ist es, wenn die Spreizschrägen der beiden Spreizmechanismen zueinander die gleiche Steigung aufweisen. Dadurch bleiben die beiden Bauteile, insbesondere die Innen- und Außenanpressfläche, zueinander parallel, auch wenn diese gegeneinander zum Vergrößern des radialen Abstands verschoben werden. Zusätzlich oder alternativ können die Spreizschrägen der beiden Spreizmechanismen parallel zueinander sein.

Vorteilhaft ist es, wenn die Spreizanordnung einen zwischen den beiden Bauteilen ausgebildeten ersten Führungsmechanismus aufweist, um die beiden Bauteile in Axialrichtung der Spreizanordnung zueinander bewegbar zu führen. Zusätzlich oder alternativ kann die Spreizanordnung auch einen zwischen den beiden Bauteilen ausgebildeten zweiten Führungsmechanismus aufweisen. Mit Hilfe des ersten und/oder zweiten Führungsmechanismus können ferner die beiden Bauteile gegeneinander verdrehgesichert werden. Die Verdrehsicherung kann um die Radialrichtung ausgebildet sein.

Von Vorteil ist es, wenn der erste und zweite Führungsmechanismus zueinander in Axialrichtung der Spreizanordnung versetzt sind, so dass die beiden Bauteile in Axialrichtung an zwei unterschiedlichen Orten geführt sind. Dadurch kann beispielsweise eine Zweipunktführung ausgebildet sein.

Vorteilhaft ist es, wenn der Führungsmechanismus eine Axialführungsnut und ein in der Axialführungsnut geführtes Führungselement umfasst. Die Axialführungsnut ist dabei in einem Bauteil und das Führungselement im anderen Bauteil angeordnet. Das Führungselement kann sich somit zwar in der Axialführungsnut in Axialrichtung bewegen, jedoch nicht in einer Querrichtung dazu. Die Querrichtung kann die Umfangsrichtung der Spreizanordnung sein.

Von Vorteil ist es, wenn das Führungselement an seinem freien Ende eine sich in Umfangsrichtung der Spreizanordnung erstreckende erste Hinterschneidung aufweist, die derart formschlüssig in eine korrespondierende zweite Hinterschneidung der Axialführungsnut eingreift, dass die beiden Bauteile in Radialrichtung der Spreizanordnung formschlüssig miteinander gekoppelt sind. Dadurch können die beiden Bauteile nicht in Radialrichtung auseinandergezogen werden. Die beiden Bauteile bleiben in Radialrichtung gekoppelt.

Vorteilhaft ist es, wenn sich die Axialführungsnut im Bereich eines ihrer beiden axialen Enden verbreitert, so dass die erste Hinterschneidung des Führungselements zur Montage der Spreizanordnung in Radialrichtung in die Axialführungsnut eingeführt werden kann. Die Axialführungsnut weist somit in diesem Bereich einen Einführbereich für die erste Hinterschneidung auf.

Von Vorteil ist es, wenn eine erste Axialführungsnut des ersten Führungsmechanismus in der ersten Spreizschräge ausgebildet ist. Zusätzlich oder alternativ ist es von Vorteil, wenn ein erstes Führungselement des ersten Führungsmechanismus am ersten Spreizelement ausgebildet ist. Dadurch kann die Spreizanordnung kompakt ausgebildet werden.

Vorteilhaft ist es, wenn das erste Führungselement als radialer Fortsatz am ersten Spreizelement ausgebildet ist. Der radiale Fortsatz kann somit in die Axialführungsnut eingreifen.

Von Vorteil ist es, wenn eine zweite Axialführungsnut des zweiten Führungsmechanismus in dem zweiten Spreizelement ausgebildet ist. Zusätzlich oder alternativ ist es von Vorteil, wenn ein zweites Führungselement des zweiten Führungsmechanismus in der zweiten Spreizschräge ausgebildet ist. Mittels der zweiten Axialführungsnut und/oder des zweiten Führungselements in der zweiten Axialführungsnut kann die Zweipunktführung ausgebildet werden.

Vorteilhaft ist es, wenn die Spreizanordnung einen Rastmechanismus umfasst, der ein axiales Verschieben der beiden Bauteile in Richtung der Montagestellung sperrt. Der Rastmechanismus rastet ein, wenn die Bauteile von der Spreizstellung in die Montagestellung bewegt werden sollen. Dadurch können die beiden Bauteile schrittweise von der Montagestellung in die Spreizstellung gebracht werden. Der Rastmechanismus kann jedoch derart ausgebildet sein, dass dieser lösbar ist.

Von Vorteil ist es, wenn der Rastmechanismus eine gezackte Rastfläche und ein mit der Rastfläche korrespondierendes elastisches Rastelement umfasst. Dabei kann die gezackte Rastfläche an einem der beiden Bauteile und das Rastelement an dem anderen Bauteil angeordnet sein.

Vorteilhaft ist es, wenn die gezackte Rastfläche in der zweiten Spreizschräge ausgebildet ist. Zusätzlich oder alternativ kann das elastische Rastelement an dem zweiten Spreizelement ausgebildet sein. Dadurch kann der Rastmechanismus und infolgedessen die Spreizanordnung kompakt ausgebildet werden.

Von Vorteil ist es, wenn zumindest die beiden miteinander korrespondierenden Bauteile mit ihren beiden Spreizmechanismen eine Spreizeinheit bilden und dass die Spreizanordnung mehrere in Umfangsrichtung verteilte Spreizeinheiten umfasst, die einen Spreizring bilden. Dabei kann der Spreizring auch geschlossen sein. Die Spreizeinheiten sind somit Glieder des Spreizrings. Die Spreizeinheiten können miteinander, insbesondere lösbar oder fest, verbunden sein. Die Spreizeinheiten können beliebig aneinandergefügt werden, so dass eine nahezu beliebige Größe des Spreizrings ausgebildet werden kann.

Vorteilhaft ist es, wenn der Spreizring durch einen die ersten Bauteile umfassenden Innenspreizring ausgebildet ist. Zusätzlich oder alternativ kann der Spreizring durch einen die zweiten Bauteile umfassenden Außenspreizring ausgebildet sein. Die ersten und/oder die zweiten Bauteile können ebenfalls gliedweise zum Innen- und/oder Außenspreizring, insbesondere lösbar oder fest, zusammengefügt sein. Dadurch kann die Spreizanordnung modular zusammengefügt werden.

Von Vorteil ist es, wenn der Außenspreizring eine Abstützfläche aufweist, mit dem die Spreizanordnung in Axialrichtung an der Wand und/oder der Ringdichtung abgestützt werden kann. Dadurch kann verhindert werden, dass sich die Spreizanordnung gegen die Wand und/oder die Ringdichtung bewegt.

Zusätzlich oder alternativ ist es von Vorteil, wenn der Innenspreizring eine stirnseitige Schlagfläche aufweist, über die zum axialen Verschieben des Innenspreizrings eine Verschiebekraft eingebracht werden kann. Auf die Schlagfläche kann beispielsweise mit einem Hammer geschlagen werden, um die beiden Bauteile von der Montagestellung in die Spreizstellung zu verschieben.

Zusätzlich oder alternativ können die beiden Bauteile auch mit einem Aktor, beispielsweise einem hydraulischen Aktor bzw. einem hydraulischen Kolben, gegeneinander verschoben werden. Der hydraulische Aktor kann beispielsweise auf dem Rohr befestigt werden, so dass dieser die beiden Bauteile gegeneinander in Axialrichtung verschieben kann.

Vorteilhaft ist es, wenn zwischen zwei in Umfangsrichtung benachbarten ersten und/oder zweiten Bauteilen zweier benachbarter Spreizeinheiten ein Freiraum ausgebildet ist, so dass diese zueinander in Umfangsrichtung bewegbar sind. Der Freiraum kann sich somit verkleinern und vergrößern.

Ferner ist es von Vorteil, wenn in Umfangsrichtung benachbarte Bauteile über zumindest ein flexibles Verbindungselement verbunden sind, das den Freiraum überbrückt. Dadurch kann die Spreizanordnung, insbesondere der Innen- und/oder Außenspreizring, gedehnt und/oder gestaucht werden. Dadurch kann die Montage erleichtert werden, dass die Spreizanordnung gedehnt werden kann, um die Spreizanordnung über das Rohr zu schieben.

Vorgeschlagen wird des Weiteren eine Dichtungsanordnung zum Abdichten eines Ringspalts zwischen einer Wandbohrung und einem im Inneren der Wandbohrung angeordneten Körper mit einer Ringdichtung und einer Spreizanordnung zum radialen Verpressen der Ringdichtung. Der Körper kann beispielsweise ein Rohr sein, welches durch die Wand durchgeführt wird. Bei dem Körper kann es sich aber auch um eine Leitung handeln. Der Körper ist im Allgemeinen ein langgestreckter, im Wesentlichen zylinderförmiger Körper.

Erfindungsgemäß ist die Spreizanordnung gemäß einem oder mehreren Merkmalen der vorangegangenen und/oder nachfolgenden Beschreibung ausgebildet.

Vorteilhaft ist es, wenn die Ringdichtung einen ringförmigen Hohlraum aufweist, in dem die Spreizanordnung zumindest teilweise angeordnet ist.

Von Vorteil ist es, wenn die Ringdichtung einen U-förmigen Querschnitt aufweist. Zusätzlich oder alternativ kann die Ringdichtung an einer ihrer Stirnseiten eine Öffnung aufweisen. Die Öffnung ist dabei zwischen den Enden der Schenkel der U-förmigen Querschnitts angeordnet. Die Ringdichtung liegt durch den U-förmigen Querschnitt an der Innen- und der Außenanpressfläche an. Die Ringdichtung dichtet somit gegen das Rohr und die Wandbohrung hin ab. Durch die Öffnung kann die Spreizanordnung in den Hohlraum der Ringdichtung eingeführt werden.

Weitere Vorteile der Erfindung sind in den nachfolgenden Ausführungsbeispielen beschrieben. Es zeigen:
- **Figur 1a**: eine schematische Seitenansicht einer Spreizanordnung mit zwei Bauteilen in einer Montagestellung,
- **Figur 1b**: eine schematische Seitenansicht einer Spreizanordnung mit zwei Bauteilen in einer Spreizstellung,
- **Figur 1c**: eine schematische Seitenansicht einer Spreizanordnung mit Durchbrüchen,
- **Figur 2a**: eine schematische, perspektivische Ansicht eines ersten Bauteils,
- **Figur 2b**: eine schematische, perspektivische Ansicht eines zweiten Bauteils,
- **Figur** 3: eine schematische Draufsicht auf mehrere, miteinander verbundene erste Bauteile,
- **Figur 4a**: einen Ausschnitt einer Wand mit Wandbohrung und durchgeführtem Rohr,
- **Figur 4b**: eine Ringdichtung zum Abdichten eines Ringspalts,
- **Figur 5**: eine schematische, teilweise geschnittene Seitenansicht der Ringdichtung mit Spreizanordnung,
- **Figur 6**: eine schematische Schnittansicht einer Ringdichtung mit Rippen,
- **Figur 7**: eine schematische Vorderansicht einer Spreizanordnung und einer Ringdichtung,
- **Figur 8**: eine schematische Vorderansicht auf mehrere zweite Bauteile 2 mit Koppeleinrichtung,
- **Figuren 9a** - **e**: mehrere Ansichten von ersten Bauteilen,
- **Figuren 10a - d**: mehrere Ansichten eines zweiten Bauteils,
- **Figuren 11a - c**: mehrere Ansichten von zweiten Bauteilen,
- **Figuren 12a** - **b**: mehrere Ansichten von miteinander gekoppelten zweiten Bauteilen und
- **Figur 13**: eine Ansicht einer Dichtungsanordnung mit Ringdichtung und Spreizanordnung.

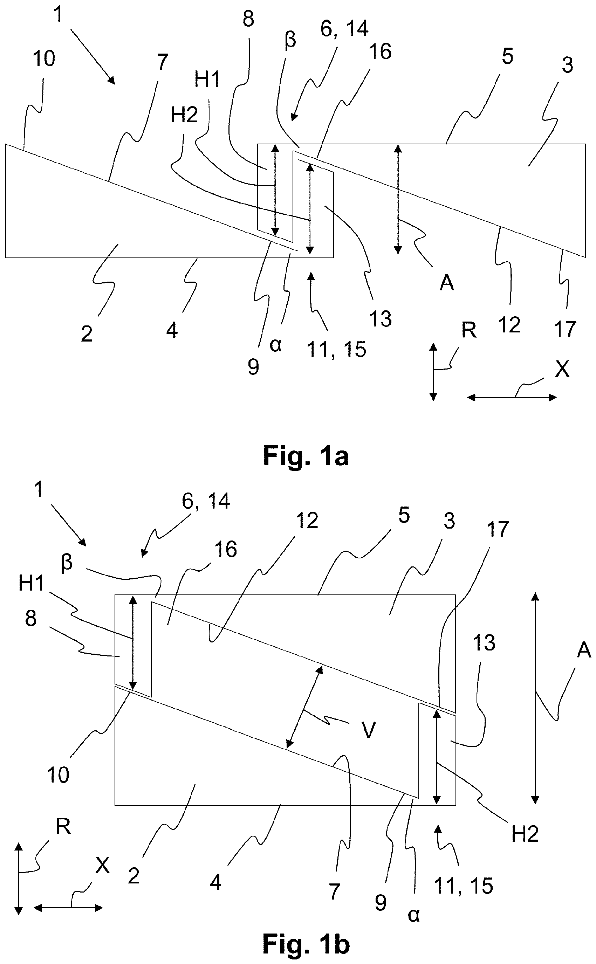

Figur 1a zeigt eine schematische Seitenansicht einer Spreizanordnung 1 mit zwei Bauteilen 2, 3 in einer Montagestellung. Figur 1b zeigt eine schematische Seitenansicht der Spreizanordnung 1 mit zwei Bauteilen 2, 3 in einer Spreizstellung. Der Einfachheit halber und zur besseren Beschreibung wird die Funktionsweise anhand beider Figuren 1a, 1b erläutert. Ferner werden der Einfachheit halber Merkmale einmal beschrieben, gelten jedoch für beiden Figuren 1a, 1b sowie für weitere Figuren. Außerdem sind in beiden Figuren 1a, 1b sowie in weiteren Figuren gleiche Merkmale mit gleichen Bezugszeichen versehen.

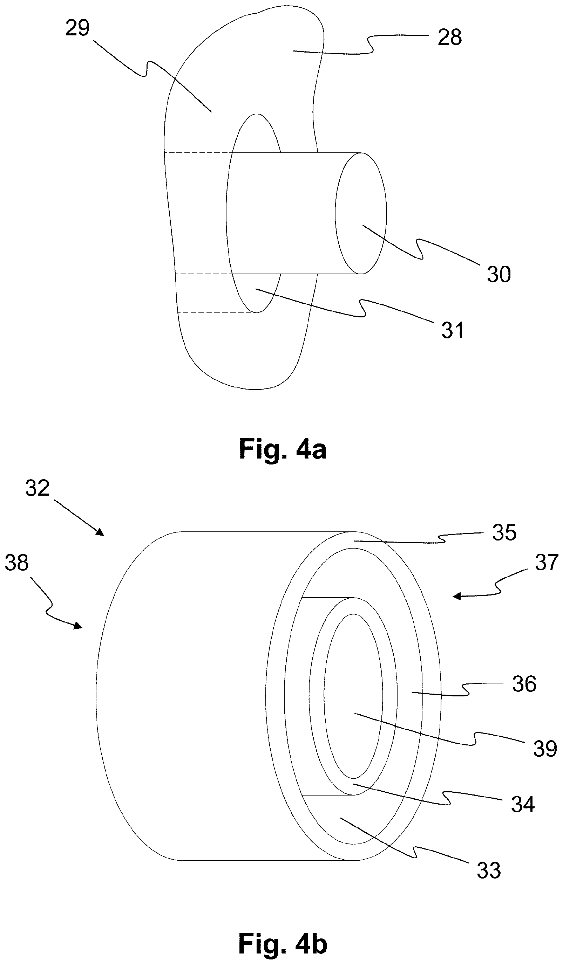

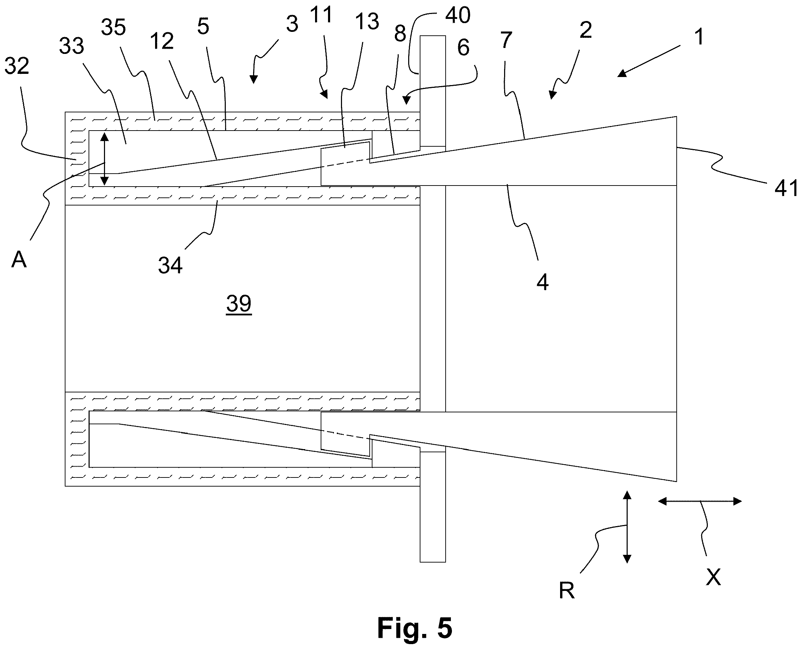

Die Spreizanordnung 1 umfasst ein radial inneres erstes Bauteil 2, welches eine Innenanpressfläche 4 aufweist. Des Weiteren umfasst die Spreizanordnung 1 ein radial äußeres zweites Bauteil 3, welches eine Außenanpressfläche 5 aufweist. Das erste Bauteil 2 ist somit in Radialrichtung R innen und das zweite Bauteil 3 ist in Radialrichtung R außen angeordnet. Mittels der Spreizanordnung 1 kann mit Hilfe einer Ringdichtung 32 ein Ringspalt 31 abgedichtet werden (siehe Figur 4a, b und 5). Der Ringspalt 31 bildet sich beispielsweise zwischen einem Rohr 30 oder einer Leitung und einer Wandbohrung 29. Die Spreizanordnung 1 kann dabei um das Rohr 30 oder die Leitung gelegt werden und im Bereich der Wandbohrung 29 die Ringdichtung 32 gegen die Wandbohrung 29 und/oder das Rohr 30 oder die Leitung pressen, so dass der Ringspalt 31 abgedichtet wird.

Da die Spreizanordnung 1 um das Rohr 30 oder die Leitung im bestimmungsgemäßen Gebrauch um das Rohr 30 gelegt wird, ist das erste Bauteil 2 radial innen angeordnet, also dem Rohr 30 zugewandt. Dagegen ist das zweite Bauteil 3 radial außen angeordnet, also der Wandbohrung 29 zugewandt. Ferner ist die Innenanpressfläche 4 dem Rohr 30 und die Außenanpressfläche 5 der Wandbohrung 29 zugewandt. Die, hier nicht gezeigte, Ringdichtung 32 kann somit an der Innenanpressfläche 4 und/oder der Außenanpressfläche 5 anliegen.

Des Weiteren weist die Spreizanordnung 1 zwischen den beiden Bauteilen 2, 3 einen ersten Spreizmechanismus 6 auf. Der erste Spreizmechanismus 6 umfasst eine an einem der beiden Bauteile 2, 3 ausgebildete erste Spreizschräge 7 und ein an dem anderen Bauteil 2, 3 ausgebildetes, entlang der ersten Spreizschräge 7 bewegbares erstes Spreizelement 8. Im vorliegenden Ausführungsbeispiel ist die erste Spreizschräge 7 am ersten Bauteil 2 und das erste Spreizelement 8 am zweiten Bauteil 3 ausgebildet.

Die erste Spreizschräge 7 ist gegen die Axialrichtung X geneigt. Die erste Spreizschräge 7 ist in Axialrichtung X ansteigend.

Ferner sind beide Bauteile 2, 3 relativ zueinander in Axialrichtung X der Spreizanordnung 1 aus einer in Figur 1a gezeigten Montagestellung in eine in Figur 1b gezeigten Spreizstellung verschiebbar.

Werden die beiden Bauteile 2, 3 aus der Montagestellung in die Spreizstellung verschoben, wird das erste Spreizelement 8 entlang der ersten Spreizschräge 7 verschoben. Infolgedessen wird das erste Spreizelement 8 in Radialrichtung R verschoben. Das erste Spreizelement 8 wird bei der Verschiebung entlang der ersten Spreizschräge 7 nach außen verschoben.

Das erste Spreizelement 8 wird bei der Verschiebung der beiden Bauteile 2, 3 von der Montage- in die Spreizstellung von einem ersten Abschnitt 9 der ersten Spreizschräge 7 in einen zweiten Abschnitt 10 der ersten Spreizschräge 7 verschoben. Beide Abschnitte 9, 10 sind in Axialrichtung X voneinander beabstandet. Gemäß dem vorliegenden Ausführungsbeispiel ist der zweite Abschnitt 10 radial außen und der erste Abschnitt 9 im Vergleich dazu radial innen angeordnet.

Wird das erste Spreizelement 8 entlang der ersten Spreizschräge 7 und somit vom ersten Abschnitt 9 in den zweiten Abschnitt 10 verschoben, wird infolgedessen ein radialer Abstand A zwischen der Innenanpressfläche 4 und der Außenanpressfläche 5 vergrößert. In der Montagestellung gemäß Figur 1a ist der radiale Abstand A geringer als in der Spreizstellung gemäß Figur 1b. Dadurch kann die Spreizanordnung 1 auf einfache Weise in der Montagestellung mit der Ringdichtung 32 zusammengeführt werden. Weiterhin kann die Spreizanordnung 1 in der Montagestellung auf einfache Weise in den Ringspalt 31 zwischen Rohr 30 oder Leitung und Wandbohrung 29 eingeführt werden. Wenn die Spreizanordnung 1 an der vorgesehenen Position im Ringspalt 31 angeordnet ist, kann die Spreizanordnung 1 in die Spreizstellung gebracht werden, wobei sich der radiale Abstand A vergrößert. Infolgedessen presst die Innen- und/oder Außenanpressfläche 4, 5 die Ringdichtung 32 auf das Rohr 30 oder die Leitung und/oder von innen gegen die Wandbohrung 29, so dass der Ringspalt 31 abgedichtet wird.

Außerdem weist die Spreizanordnung 1 einen zwischen den beiden Bauteilen 2, 3 ausgebildeten zweiten Spreizmechanismus 11 auf. Des Weiteren ist der zweite Spreizmechanismus 11 vom ersten Spreizmechanismus 6 in Axialrichtung X versetzt angeordnet, so dass die beiden Bauteile 2, 3 in Axialrichtung X an zwei unterschiedlichen, insbesondere in Axialrichtung X voneinander beabstandeten, Orten gegeneinander abgestützt sind. Dadurch können die Innen- und die Außenanpressfläche 4, 5 sich nicht gegeneinander verdrehen. Eine Orientierung zwischen der Innen- und der Außenanpressfläche 4, 5 bzw. zwischen beiden Bauteilen 2, 3 bleibt dadurch erhalten bzw. ändert sich nicht.

Da beide Spreizmechanismen 6, 11 in Axialrichtung X voneinander beabstandet sind, kann zumindest eine Spreizschräge 7, 12 mit einem geringeren Winkel α, β ansteigen, wobei trotzdem der radiale Abstand A um einen großen Betrag vergrößert werden kann.

Ferner weisen die beiden Bauteile 2, 3 einen gemeinsamen ersten Abstützbereich 14 auf, welcher durch den ersten Spreizmechanismus 6 gebildet ist. Der erste Abstützbereich 14 und der erste Spreizmechanismus 6 sind somit an denselben Stellen zwischen den beiden Bauteilen 2, 3 angeordnet. Außerdem weisen die beiden Bauteile 2, 3 einen gemeinsamen zweiten Abstützbereich 15 auf, welcher durch den zweiten Spreizmechanismus 11 gebildet ist. Der zweite Abstützbereich 15 und der zweite Spreizmechanismus 11 sind somit an denselben Stellen zwischen den beiden Bauteilen 2, 3 angeordnet. Die beiden Abstützbereiche 14, 15 sind ebenfalls in Axialrichtung X voneinander beabstandet.

Gemäß dem vorliegenden Ausführungsbeispiel weist der zweiten Spreizmechanismus 11 eine zweite Spreizschräge 12 auf, welche an einem der beiden Bauteile 2, 3 ausgebildet ist. Außerdem umfasst der zweite Spreizmechanismus 11 ein zweites Spreizelement 13, welches an dem zur zweiten Spreizschräge 12 anderen Bauteil 2, 3 angeordnet ist. Gemäß dem vorliegenden Ausführungsbeispiel ist die zweite Spreizschräge 12 am zweiten Bauteil 3 und das zweite Spreizelement 13 am ersten Bauteil 2 angeordnet.

Die zweite Spreizschräge 12 ist in Axialrichtung X geneigt. Die zweite Spreizschräge 12 steigt in Axialrichtung X an.

Ferner weist die erste Spreizschräge 7 zur Innenanpressfläche 4 einen ersten Winkel α auf. Außerdem weist die zweite Spreizschräge 12 zur Außenanpressfläche 5 einen zweiten Winkel β auf. Gemäß dem vorliegenden Ausführungsbeispiel sind beiden Winkel α, β gleich, so dass eine Orientierung der beiden Bauteile 2, 3 zueinander gleich bleibt. Der erste und/oder der zweite Winkel α, β können beispielsweise zwischen 5° und 35° betragen.

Das zweite Spreizelement 13 ist des Weiteren von einem dritten Abschnitt 16 in einen vierten Abschnitt 17 der zweiten Spreizschräge 12 verschiebbar. Der dritte und der vierte Abschnitt 16, 17 sind in Axialrichtung X zueinander versetzt. Dabei wird das zweite Spreizelement 13 in Radialrichtung R verschoben, so dass sich der radiale Abstand A vergrößert.

Gemäß dem vorliegenden Ausführungsbeispiel sind die beiden Spreizmechanismen 6, 11 voneinander getrennt.

Ferner sind gemäß dem vorliegenden Ausführungsbeispiel die beiden Spreizmechanismen 6, 11 in Radialrichtung R zueinander versetzt.

Außerdem sind gemäß dem vorliegenden Ausführungsbeispiel die Innen- und die Außenanpressfläche 4, 5 zueinander parallel. Beim Vergrößern des radialen Abstands A bleiben die Innen- und die Außenanpressfläche 4, 5 zueinander parallel. Dadurch kann die Ringdichtung 32 gleichmäßig an das Rohr 30 und/oder gegen die Wandbohrung 29 gepresst werden.

Die Innen- und die Außenanpressfläche 4, 5 können dadurch parallel auseinandergepresst werden, da die beiden Spreizschrägen 7, 12 den gleichen Winkel α, β aufweisen. Ferner sind gemäß dem vorliegenden Ausführungsbeispiel die beiden Spreizelemente 8, 13 gleich hoch, d.h. sie weisen die gleiche Höhe H1, H2 über den jeweiligen Spreizschrägen 7, 12 auf.

In einem alternativen, hier nicht gezeigten Ausführungsbeispiel, können die die beiden Spreizelemente 8, 13 auch eine unterschiedliche Höhe H1, H2 aufweisen.

Gemäß dem vorliegenden Ausführungsbeispiel sind die beiden Spreizschrägen 7, 12 zueinander in Axialrichtung X und/oder in Radialrichtung R zueinander versetzt angeordnet. Die beiden Spreizschrägen 7, 12 sind voneinander beabstandet angeordnet. Die beiden Spreizschrägen 7, 12 weisen einen Versatz V zueinander auf. Der Versatz V entspricht einem Abstand, insbesondere einem kürzesten Abstand, zwischen den beiden Spreizschrägen 7, 12. Der Versatz V kann auch als Verschiebung der beiden Spreizschrägen 7, 12 zueinander aufgefasst werden. Durch den Versatz V können beide Spreizschrägen 7, 12 zueinander parallelverschoben bzw. parallelversetzt sein. Der Versatz V ist der Übersichtlichkeit halber lediglich in der Figur 1b kenntlich gemacht.

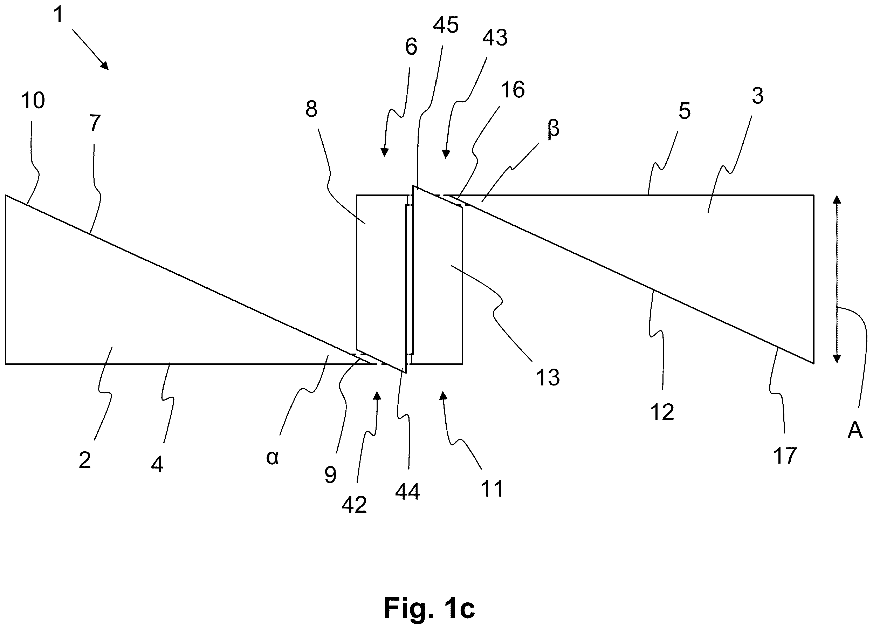

Figur 1c zeigt ein weiteres Ausführungsbeispiel der Spreizanordnung 1 in der Montagestellung. Außerdem werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Das erste Bauteil 2 weist in diesem Ausführungsbeispiel einen ersten Durchbruch 42 auf. Der erste Durchbruch 42 ist in der Innenanpressfläche 4 angeordnet. Die Innenanpressfläche 4 kann den ersten Durchbruch 42 vollständig umranden.

Ferner ist in dem ersten Durchbruch 42 das erste Spreizelement 8 zumindest teilweise angeordnet. Gemäß dem vorliegenden Ausführungsbeispiel ragt das erste Spreizelement 8 durch den ersten Durchbruch 42 hindurch. Gemäß dem vorliegenden Ausführungsbeispiel ragt das erste Spreizelement 8 über die Innenanpressfläche 4 hinaus. Dabei kann ein erstes Ende 44 des ersten Spreizelements 8 durch den Durchbruch 42 hindurch und/oder über die Innenanpressfläche 4 hinausragen.

Gemäß dem vorliegenden Ausführungsbeispiel ist das erste Spreizelement 8 zumindest teilweise im ersten Abschnitt 9 der ersten Spreizschräge 7 angeordnet.

Mittels des Durchbruchs 42 kann die erste Spreizschräge 7, beispielsweise im Vergleich zu der ersten Spreizschräge der Figur 1a, noch steiler ausgebildet werden. Mittels des Durchbruchs 42 kann der erste Winkel α, im Vergleich zu dem ersten Winkel α der Figur 1a, größer ausgebildet werden. Infolgedessen kann der radiale Abstand A klein sein, so dass die Spreizanordnung 1 gut in die Ringdichtung 32 eingeführt werden kann. Wenn die beiden Bauteile 2, 3 in die Spreizstellung verschoben werden, steigt der radiale Abstand A gemäß der größeren Steigung der ersten Spreizschräge 7 stark an. Die Ringdichtung 32 kann infolgedessen mittels einer vergleichsweise geringen axialen Verschiebung weit aufgespreizt werden.

Ferner kann sich, wenn die Spreizanordnung 1 in der Ringdichtung 32 eingeschoben ist, das erste Ende 44 in der Ringdichtung 32 verhaken, so dass die Spreizanordnung 1 und die Ringdichtung 32 miteinander verbunden sind.

Gemäß dem vorliegenden Ausführungsbeispiel weist zusätzlich oder alternativ das zweite Bauteil 3 einen zweiten Durchbruch 43 auf. Der zweite Durchbruch 43 ist dabei in der Außenanpressfläche 5 angeordnet. Die Außenanpressfläche 5 kann den zweiten Durchbruch 43 vollständig umranden. Im zweiten Durchbruch 43 ist das zweite Spreizelement 13 zumindest teilweise angeordnet. Das zweite Spreizelement 13 weist ein zweites Ende 45 auf. Das zweite Spreizelement 13 und/oder dessen zweites Ende 45 ragt zumindest teilweise in den zweiten Durchbruch 43 hinein und/oder über die Außenanpressfläche 5 hinaus.

Mittels des zweiten Durchbruchs 43 kann ebenfalls die zweite Spreizschräge 12 steiler ausgebildet werden. Mit Hilfe des zweiten Durchbruchs 43 kann der zweite Winkel β, im Vergleich zur Figur 1a, größer ausgebildet werden.

Mittels des ersten und/oder des zweiten Durchbruchs 43 und der daraus folgenden Möglichkeit, die ersten und/oder zweite Spreizschräge 7, 12 steiler auszubilden, kann bei einer kürzeren Verschiebung in Axialrichtung X der radiale Abstand A noch mehr vergrößert werden.

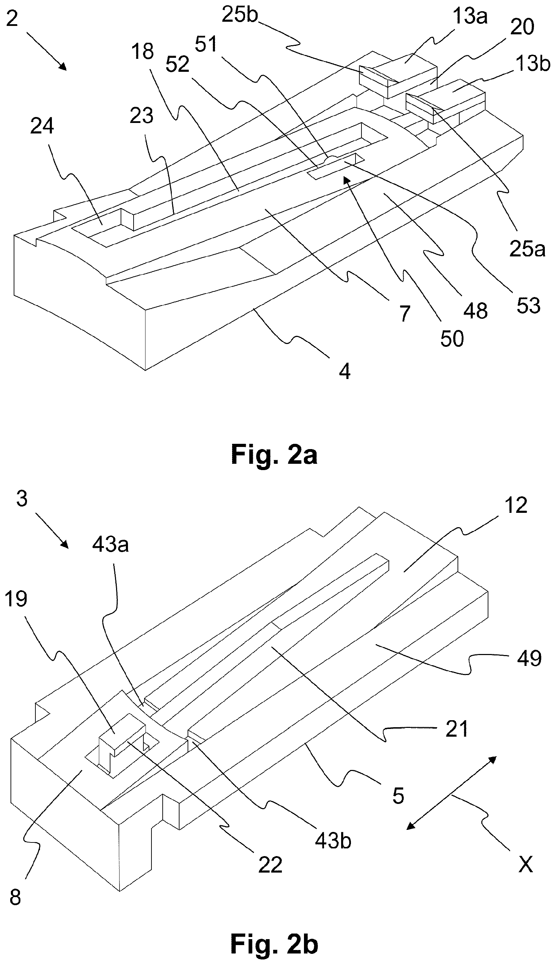

Figur 2a zeigt eine schematische, perspektivische Ansicht des ersten Bauteils 2 in einer Ausführung. Figur 2b zeigt eine schematische, perspektivische Ansicht des zweiten Bauteils 3 in einer Ausführung. Beide Bauteile 2, 3 und somit beide Figuren 2a, 2b werden wieder parallel zueinander erklärt. Außerdem werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Zu beachten ist hier noch, dass das erste Bauteil 2 der Figur 2a im Vergleich zu den Figuren 1a, 1b im Wesentlichen gleich orientiert ist. Dagegen ist das zweite Bauteil 3 der Figur 2b im Vergleich zu den Figuren 1a, 1b entgegengesetzt orientiert, d.h. das zweite Bauteil 3 ist im Vergleich zu den Figuren 1a, 1b auf dem Kopf stehend dargestellt.

Das erste Bauteil 2 weist die erste Spreizschräge 7 und das zweite Spreizelement 13a, 13b auf, welches hier zweigeteilt ist. Das zweite Bauteil 3 weist die zweite Spreizschräge 12 und das erste Spreizelement 8 auf. Die erste Spreizschräge 7 des ersten Bauteils 2 und das erste Spreizelement 8 des zweiten Bauteils 3 bilden den ersten Spreizmechanismus 6, wenn beiden Bauteile 2, 3 zusammengeführt sind. Die zweite Spreizschräge 12 des zweiten Bauteils 3 und das zweite Spreizelement 13a, 13b des ersten Bauteils 2 bilden den zweiten Spreizmechanismus 11, wenn beiden Bauteile 2, 3 zusammengeführt sind.

Gemäß dem vorliegenden Ausführungsbeispiel ist die erste Spreizschräge 7 gewölbt, nämlich konvex. Das dazugehörige erste Spreizelement 8 ist ebenfalls gewölbt, nämlich konkav. Das erste Spreizelement 8 ist hierbei flächig ausgebildet. Beide Wölbungen passen dabei zusammen bzw. weisen die gleiche bzw. entgegengesetzte Wölbung auf.

Des Weiteren weist gemäß den vorliegenden Ausführungsbeispielen der Figuren 2a, 2b das erste Bauteil 2 eine erste Axialführungsnut 18 auf. Das zweite Bauteil 3 weist ein erstes Führungselement 19 auf. Das erste Führungselement 19 kann in der ersten Axialführungsnut 18 geführt werden, wobei es sich in Axialrichtung X bewegen kann, um die beiden Bauteile 2, 3 gegeneinander von der Montagestellung in die Spreizstellung zu verschieben. Die erste Axialführungsnut 18 und das erste Führungselement 19 bilden zusammen einen ersten Führungsmechanismus.

Des Weiteren weist gemäß den vorliegenden Ausführungsbeispielen der Figuren 2a, 2b das erste Bauteil 2 eine zweite Axialführungsnut 20 auf. Die zweite Axialführungsnut 20 ist dadurch ausgebildet, dass das zweite Spreizelement 13a, 13b zweigeteilt ist. Zwischen den beiden Teilen des zweigteilten Spreizelements 13a, 13b ist die zweite Axialführungsnut 20 ausgebildet. Die erste und die zweite Axialführungsnut 18, 20 erstrecken sich parallel zueinander.

Außerdem weist das zweite Bauteil 3 ein zweites Führungselement 21 auf. Das zweite Führungselement 21 kann sich in Axialrichtung X in der zweiten Axialführungsnut 20 frei bewegen, wenn beide Bauteile 2, 3 zusammengefügt sind. Das zweite Führungselement 21 ist gemäß dem vorliegenden Ausführungsbeispiel als Führungsrippe ausgebildet, welche sich in Axialrichtung X erstreckt.

Mittels des zumindest einen Führungsmechanismus können die beiden Bauteile 2, 3 zueinander verdrehgesichert sein. Die beiden Führungsmechanismen bilden zusammen eine Zweipunktführung.

Ferner weist das zweite Bauteil 3 gemäß dem vorliegenden Ausführungsbeispiel eine erste Hinterschneidung 22 auf, welche am freien Ende des ersten Führungselements 19 angeordnet ist. Das erste Führungselement 19 weist durch die erste Hinterschneidung 22 ein Haken auf. Des Weiteren weist das erste Bauteil 2 gemäß dem vorliegenden Ausführungsbeispiel eine zweite Hinterschneidung 23 auf, welche in der ersten Axialführungsnut 18 angeordnet ist bzw. an dieser ausgebildet ist. Durch die erste und die zweite Hinterschneidung 22, 23 können die beiden Bauteile 2, 3 miteinander gekoppelt werden. Die erste Hinterschneidung 22 greift, wenn beide Bauteile 2, 3 miteinander gekoppelt sind, formschlüssig in die zweite Hinterschneidung 23 ein.

Das erste Führungselement 19 ist hier ferner als radialer Fortsatz ausgebildet, so dass dieser in die erste Axialführungsnut 18 eingreifen kann.

Das erste Führungselement 19 ist gemäß dem vorliegenden Ausführungsbeispiel ferner auf dem ersten Spreizelement 8 angeordnet.

Die erste Axialführungsnut 18 ist gemäß dem vorliegenden Ausführungsbeispiel außerdem in der ersten Spreizschräge 7 angeordnet. Die erste Spreizschräge 7 ist um die erste Axialführungsnut 18 angeordnet. Dadurch kann die Spreizanordnung 1 kompakt ausgebildet werden.

Des Weiteren ist gemäß dem vorliegenden Ausführungsbeispiel das zweite Führungselement 21 auf der zweiten Spreizschräge 12 angeordnet. Die zweite Spreizschräge 12 ist um das zweite Führungselement 21 angeordnet. Das zweite Führungselement 21 teilt somit die zweite Spreizschräge 12 in zwei Teile. Infolgedessen ist auch das zweite Spreizelement 13a, 13b zweigeteilt. Dadurch kann die Spreizanordnung ebenfalls kompakt ausgebildet werden.

Außerdem weist die erste Axialführungsnut 18 gemäß dem vorliegenden Ausführungsbeispiel einen Einführbereich 24 auf, durch welchen das erste Führungselement 19 mit der ersten Hinterschneidung 22 in die erste Axialführungsnut 18 eingeführt werden kann, so dass die erste Hinterschneidung 22 mit der zweiten Hinterschneidung 23 in Eingriff gebracht werden kann.

Ferner weist das erste Bauteil 2 gemäß dem vorliegenden Ausführungsbeispiel zumindest ein Rastelement 25a, b auf, welches gemäß dem vorliegenden Ausführungsbeispiel an dem zumindest einen zweiten Spreizelement 13a, b angeordnet ist. Hier sind zwei Rastelemente 25a, b gezeigt. Ferner kann die zweite Spreizschräge 12 des zweiten Bauteils 3 als Rastfläche ausgebildet sein. Die zweite Spreizschräge 12 kann beispielsweise quer zur Axialrichtung X, d.h. in Umfangsrichtung U, angeordnete Rippen aufweisen, in welche das zumindest eine Rastelement 25a, b eingreifen kann. Dadurch können die beiden Bauteile 2, 3 zwar von der Montage- in die Spreizstellung in Axialrichtung verschoben werden. Jedoch verrastet das zumindest eine Rastelement 25a, b mit der Rastfläche, wenn versucht wird, die beiden Bauteile 2, 3 von der Spreizstellung in die Montagestellung zu verschieben.

In einem weiteren Ausführungsbeispiel kann jedoch das zumindest eine Rastelement 25a, b von der Rastfläche gelöst werden, um beispielsweise die Spreizanordnung 1 demontieren zu können.

Gemäß dem vorliegenden Ausführungsbeispiel weist das zweite Bauteil 3 zwei zweite Durchbrüche 43a, 43b auf. Die Durchbrüche 43a, 43b sind zwischen der zweiten Spreizschräge 12 und dem ersten Spreizelement 8 angeordnet. In die Durchbrüche 43a, 43b können sich die Rastelement 25a, 25b und/oder das zweite Spreizelement 13 bzw. die beiden Spreizelemente 13a, 13b hinein und/oder hindurch erstrecken.

Des Weiteren weist das erste Bauteil 2 des vorliegenden Ausführungsbeispiels eine erste Umrandungsfläche 48 auf. Zusätzlich oder alternativ weist das zweite Bauteil 3 des vorliegenden Ausführungsbeispiels eine zweite Umrandungsfläche 49 auf. Die erste und/oder die zweite Umrandungsfläche 48, 49 umranden die entsprechenden Spreizschrägen 7, 12. Zumindest eine, insbesondere beide, Spreizschräge 7, 12 ist gegenüber der jeweiligen Umrandungsflächen 48, 49 in Axialrichtung X geneigt. Zumindest eine, insbesondere beide, Spreizschräge 7, 12 kann somit über die entsprechende Umrandungsflächen 48, 49 hinweg ragen. Zusätzlich oder alternativ kann zumindest eine, insbesondere beide, Spreizschräge 7, 12 in die entsprechende Umrandungsflächen 48, 49 eintauchen.

Die beiden Umrandungsflächen 48, 49 können ferner zu der entsprechenden Innen- und Außenanpressfläche 4, 5 zumindest abschnittsweise parallel sein.

In der Montagestellung liegen die beiden Umrandungsflächen 48, 49 zumindest bereichsweise aufeinander auf, so dass sich die beiden Bauteile 2, 3 gegeneinander abstützen. In der Spreizstellung sind beide Umrandungsflächen 48, 49 voneinander beabstandet.

Außerdem weist das erste Bauteil 2 gemäß dem vorliegenden Ausführungsbeispiel einen Verriegelungsmechanismus 50 auf. Mittels des Verriegelungsmechanismus 50 können die beiden Bauteile 2, 3 in der Montagestellung gegeneinander verriegelt und/oder fixiert werden. Der Verriegelungsmechanismus 50 weist hier ein Verriegelungselement 51 auf. An dem Verriegelungselement 51 kann das erste Führungselement 19 derart verriegelt werden, dass beiden Bauteile 2, 3 in der Montagestellung gegeneinander verriegelt und/oder fixiert sind. Das erste Führungselement 19 kann, nachdem es mittels dem Einführbereich 24 in die erste Axialführungsnut 18 eingeführt ist, entlang der ersten Axialführungsnut 18 vom Einführbereich 24 wegverschoben werden. Dabei werden die beiden Bauteile 2, 3 in die Montagestellung verschoben. Wird das erste Führungselement 19 von dem Einführbereich 24 in das dazu gegenüberliegende Ende der ersten Axialführungsnut 18 verschoben, wird es über das Verriegelungselement 51 geschoben. Der Verriegelungsmechanismus 50, insbesondere das Verriegelungselement 51, hält das erste Führungselement 19 fest, so dass beide Bauteile 2, 3 gegeneinander in der Montagestellung gehalten sind. Wenn die Bauteile 2, 3 in die Spreizstellung verschoben werden, rutscht das erste Führungselement 19 wieder über das Verriegelungselement 51 hinweg. Die beiden Bauteile 2, 3 sind dann gegeneinander entriegelt.

Der Verriegelungsmechanismus 50 weist ferner ein Federelement 52 auf, so dass das Verriegelungselement 51 federnd ist. Der Verriegelungsmechanismus weist ferner eine Ausnehmung 53 auf, so dass sich das Federelement 52 bewegen kann.

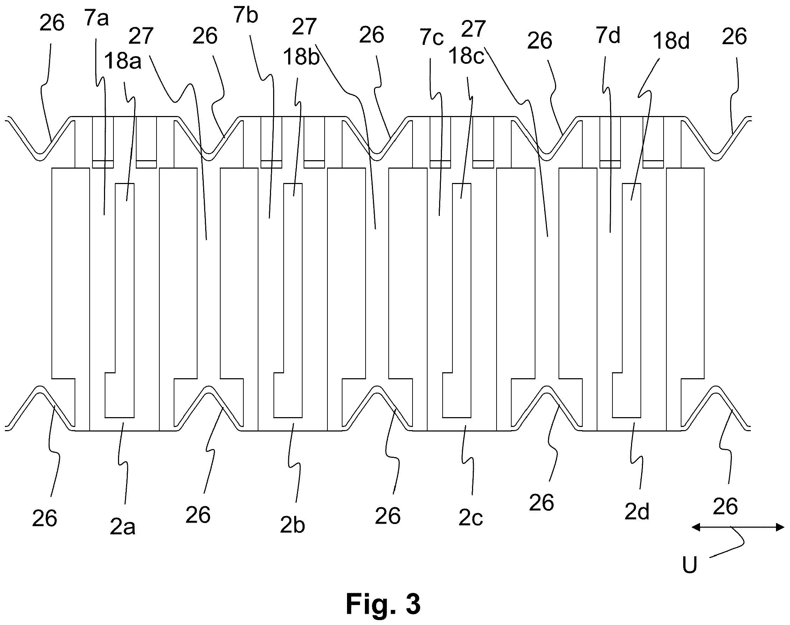

Figur 3 zeigt eine schematische Draufsicht auf mehrere, miteinander verbundene erste Bauteile 2a - d. Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Die ersten Bauteile 2a - d sind beispielsweise jeweils das Bauteil 2 der Figur 2a. Die Bauteile 2a - d weisen jeweils eine erste Spreizschräge 7a - d und jeweils eine erste Axialführungsnut 18a - d auf, wobei lediglich diese Merkmale beispielhaft mit einem Bezugszeichen versehen sind. Die ersten Bauteile 2a - d sind jeweils mittels einem flexiblen Verbindungselemente 26 miteinander verbunden. Die flexiblen Verbindungselement 26 überbrücken dabei einen, jeweils zwischen zwei ersten Bauteilen 2a - d angeordnete Freiräume 27. Mittels der Freiräume 27 sowie den flexiblen Verbindungselementen 26 können sich die ersten Bauteile 2a - d gegeneinander bewegen. Dadurch können sich die Bauteile 2a - d gegeneinander bewegen, wenn sich der radiale Abstand A der Innen- und Außenanpressfläche 4, 5 vergrößert.

Ferner sind die ersten Bauteile 2a - d in einer Umfangsrichtung U der Spreizanordnung 1 miteinander verbunden. Die ersten Bauteile 2a - d können ferner lösbar und/oder fest miteinander verbunden sein. Ein Teil der ersten Bauteile 2a - d kann fest und ein anderer Teil kann lösbar miteinander verbunden sein.

Durch die Aneinanderreihung der ersten Bauteile 2a - d in Umfangsrichtung U kann aus der Vielzahl an ersten Bauteilen 2a - d ein Innenspreizring ausgebildet werden, der um das Rohr 30 gelegt werden kann. Der Innenspreizring kann dabei natürlich aus mehreren ersten Bauteilen 2a - d zusammengesetzt sein. Ferner können die ersten Bauteile 2a - d in beliebiger Anzahl mittels den Verbindungselementen 26 zusammengefügt werden, um dadurch auf einen Durchmesser des Rohrs 30 eingehen zu können.

Das Verbinden der hier gezeigten ersten Bauteile 2a - d ist jedoch nicht auf die ersten Bauteile 2a - d beschränkt. Zusätzlich oder alternativ können auch die zweiten Bauteile 3 auf die gleiche Weise wie hier gezeigt ist, mittels den flexiblen Verbindungselementen 26 verbunden sein. Zwischen den zweiten Bauteilen 3 können ebenfalls Freiräume 27 angeordnet sein, so dass die zweiten Bauteile 3 relativ zueinander beweglich sind.

Die Vielzahl an miteinander verbundenen zweiten Bauteilen 3 können einen Außenspreizring bilden.

Dass die ersten und/oder die zweiten Bauteile 2, 3, wenn diese miteinander mit den flexiblen Verbindungselementen 26 verbunden sind und wenn zwischen ihnen jeweils ein Freiraum 27 ausgebildet ist, in Umfangsrichtung U relativ zueinander beweglich sind, weist einen weiteren Vorteil auf. Wenn die beiden Bauteile 2, 3 von der Montagestellung in die Spreizstellung bewegt werden, nimmt ein Durchmesser des Innenspreizrings ab, wobei die ersten Bauteile 2 sich aufeinander zu bewegen. Dagegen nimmt ein Durchmesser des Außenspreizrings zu, wobei sich die zweiten Bauteile 3 voneinander weg bewegen. Die flexiblen Verbindungselemente 26 können sich dehnen und stauchen.

Des Weiteren kann mittels den flexiblen Verbindungselementen 26 Abweichung eines Soll-Querschnitts der Wandbohrung 29 und/oder des Rohrs 30 ausgeglichen werden. Die Spreizanordnung 1 ist mittels den flexiblen Verbindungselementen 26 aus einer kreisförmigen Form verformbar. Die Spreizanordnung 1 kann sich dadurch dem Ist-Querschnitt der Wandbohrung 29 und/oder des Rohrs 30 anpassen. Der Soll-Querschnitt ist im Allgemeinen rund, jedoch kann der Ist-Querschnitt der Wandbohrung 29 und/oder des Rohrs 30, beispielsweise herstellungsbedingt, davon abweichen und beispielsweise elliptisch und/oder oval sein.

Figur 4a zeigt einen Ausschnitt einer Wand 28 mit einer darin angeordneten Wandbohrung 29. In der Wandbohrung 29 ist ein Rohr 30 angeordnet, so dass es durch die Wand 28 durchgeführt ist. Aus handwerklichen Gründen wird die Wandbohrung 29 stets einen größeren Durchmesser als das Rohr 30 aufweisen. Infolgedessen kann es sich nicht vermeiden lassen, dass zwischen der Wandbohrung 29 und dem Rohr 30 ein Ringspalt 31 ausgebildet ist. Der Ringspalt 31 kann dabei kreisförmig oder auch elliptisch oder oval ausgebildet sein.

In den Figuren 4a, 4b werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Um den Ringspalt 31 abdichten zu können, kann eine in Figur 4b gezeigte Ringdichtung 32 verwendet werden. Die Ringdichtung 32 weist einen ringförmigen Hohlraum 33 auf, in den die Spreizanordnung 1 eingeführt werden kann. Es ist somit vorgesehen, dass die Spreizanordnung 1 in dem Hohlraum 33 angeordnet ist. Die Ringdichtung 32 weist ferner einen U-förmigen Querschnitt auf. Die Ringdichtung 32 weist einen ersten Schenkel 34 und einen zweiten Schenkel 35 auf, welche beide zu einem Ring geschlossen sind. Die Ringdichtung 32 weist ferner eine Durchführung 39 auf, durch welche das Rohr 30 durchgeführt werden kann. Der erste Schenkel 34 liegt somit um das Rohr 30, wenn das Rohr 30 durch die Durchführung 39 durchgeführt ist. Mittels der Spreizanordnung 1 kann ferner, insbesondere mittels derer Innenanpressfläche 4, der erste Schenkel 34 auf das Rohr 30 gepresst werden, so dass der Kontaktbereich zwischen Ringdichtung 32 und Rohr 30 abgedichtet ist.

Ferner ist vorgesehen, die Ringdichtung 32 in den Ringspalt 31 einzusetzen. Der zweite Schenkel 35 liegt dann von innen an der Wandbohrung 29 an. Mittels der Spreizanordnung 1, insbesondere mit deren Außenanpressfläche 5, kann der zweite Schenkel 35 nach außen gegen die Wandbohrung 29 gepresst werden, so dass der Kontaktbereich zwischen Ringdichtung 32 und Wandbohrung 29 abgedichtet ist.

Die Spreizanordnung 1 ist somit bei bestimmungsgemäßer Verwendung im Hohlraum 33 zwischen den beiden Schenkeln 34, 35 angeordnet.

Ferner weist die Ringdichtung 32 an einer ersten Stirnseite 37 eine, insbesondere ringförmige, Öffnung 36 auf. Durch die Öffnung 36 kann die Spreizanordnung 1 in den Hohlraum 33 eingeführt werden.

Auf einer zur ersten Stirnseite 37 gegenüberliegenden zweiten Stirnseite 38 ist der Hohlraum 33 geschlossen. Auf der zweiten Stirnseite 38 ist lediglich die Durchführung 39 angeordnet.

Figur 5 zeigt die Ringdichtung 32 mit Spreizanordnung 1. Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Gemäß dem vorliegenden Ausführungsbeispiel ist das zweite Bauteil 3 bzw. sind die zum Außenspreizring zusammengefügten mehreren zweiten Bauteile 3 bereits im Hohlraum 33 der Ringdichtung 32 angeordnet. Das zweite Bauteil 3 liegt mit der Außenanpressfläche 5 an der Ringdichtung 32 bzw. dem zweiten Schenkel 35 an.

Das erste Bauteil 2 bzw. die zum Innenspreizring zusammengefügten mehreren ersten Bauteile 2 sind noch teilweise außerhalb des Hohlraums 33 angeordnet. Die Innenanpressfläche 4 ist lediglich teilweise mit der Ringdichtung 32 bzw. dem ersten Schenkel 34 in Kontakt.

Ferner befinden sich die beiden Bauteile 2, 3 bzw. der daraus gebildete Innenspreizring und Außenspreizring in der Montagestellung. In der Montagestellung ist der radiale Abstand A im Wesentlichen gleich, insbesondere beträgt der radiale Abstand A höchstens, einer radialen Ausdehnung des Hohlraums 33 bzw. einer radialen Strecke zwischen erstem und zweitem Schenkel 34, 35.

Ferner ist in der Figur 5 der erste Spreizmechanismus 6 und der zweite Spreizmechanismus 11 gezeigt. Der erste Spreizmechanismus 6 ist durch die erste Spreizschräge 7 des ersten Bauteils 2 und das erste Spreizelement 8 des zweiten Bauteils 3 gebildet. Der zweite Spreizmechanismus 11 ist durch die zweite Spreizschräge 12 des zweiten Bauteils 3 und das zweite Spreizelement 13 des ersten Bauteils 2 gebildet.

Werden die beiden Bauteils 2, 3 in Axialrichtung X von der hier gezeigten Montagestellung in die Spreizstellung verschoben, schiebt sich das erste Bauteil 2 unter das zweite Bauteil 3. Das zweite Bauteil 3 bleibt gegenüber der Ringdichtung 32 unbewegt. Das zweite Bauteil 3 weist dazu eine Abstützfläche 40 auf, welche sich an der Ringdichtung 32, insbesondere an dem hier gezeigten zweiten Schenkel 35, abstützen kann.

Wenn die beiden Bauteile 2, 3 in die Spreizstellung verschoben werden, werden durch die beiden Spreizmechanismen 6, 11 die Innen- und Außenanpressfläche 4, 5 auseinandergedrückt, wobei sich deren radialer Abstand A vergrößert. Infolgedessen wird die Ringdichtung 32 aufgespreizt. Dabei wird der erste Schenkel 34 an das Rohr 30 und der zweite Schenkel 35 von innen gegen die Wandbohrung 29 gepresst.

Um die beiden Bauteile 2, 3 gegeneinander in Axialrichtung X verschieben zu können, weist gemäß dem vorliegenden Ausführungsbeispiel das erste Bauteil 2 eine Schlagfläche 41 auf. Auf die Schlagfläche 41 kann beispielsweise mittels einem Hammer geschlagen werden, um das erste Bauteil 2 gegen das zweite Bauteil 3 und die Ringdichtung 32 zu verschieben.

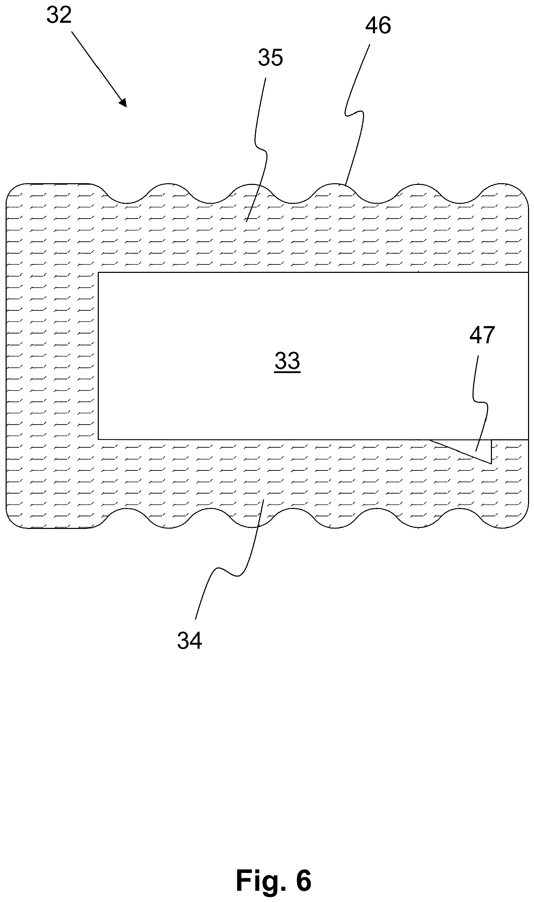

Figur 6 zeigt eine Schnittansicht der Ringdichtung 32. Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Die Ringdichtung 32 weist eine Vielzahl an Rippen 46 auf. Die Rippen 46 können dabei an der Außenseite des ersten Schenkels 34 angeordnet sein. Die Rippen 46 können somit dem Rohr 30 zugewandt sein.

Zusätzlich oder alternativ können die Rippen 46 auch an der Außenseite des zweiten Schenkels 35 angeordnet sein. Die Rippen 46 können somit der Wandbohrung 29 zugewandt sein.

Der Einfachheit halber ist lediglich eine Rippe 46 mit einem Bezugszeichen versehen. Des Weiteren können die Rippen 46 Noppen, Lamellen oder ähnliches sein. Außerdem erstrecken sich die Rippen 46 in Umfangsrichtung um die Ringdichtung 32.

Mittels den Rippen 46 kann die Ringdichtung 32 die Wandbohrung 29 besser abdichten. Beim Aufspreizen der Ringdichtung 32 können die Rippen 46 beispielsweise in Hohlräume der Wand 28 und/oder des Rohrs 30 eingepresst werden, so dass das Abdichten verbessert wird.

Ferner weist die Ringdichtung 32 des vorliegenden Ausführungsbeispiels zumindest eine Einkerbung 47. In die Einkerbung 47 kann beispielsweise das erste oder zweite Ende 44, 45 des ersten oder zweiten Spreizelements 8, 13 einrasten, so dass die Spreizanordnung 1 mit der Ringdichtung 32 verbunden ist.

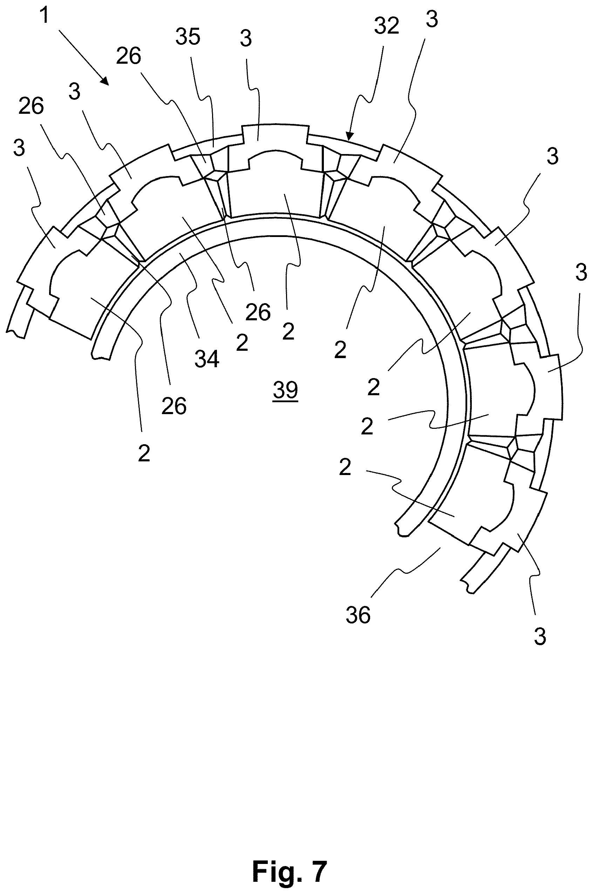

Figur 7 zeigt eine schematische Vorderansicht der Spreizanordnung 1 und der Ringdichtung 32. Die Blickrichtung ist hier auf die Öffnung 36 der Ringdichtung 32 gerichtet. Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Die Spreizanordnung 1 und die Ringdichtung 32 sind hier lediglich teilweise gezeigt dargestellt. Die Ringdichtung 32 und die Spreizanordnung 1 sind zu einem Ring geschlossen. Die Spreizanordnung 1 weist eine Vielzahl erster Bauteile 2 und eine Vielzahl zweiter Bauteile 3 auf. Die Vielzahl beider Bauteile 2, 3 ist in der Montagestellung angeordnet. Die Vielzahl beider Bauteile 2, 3 ist somit gemäß Figur 5 angeordnet. Beispielsweise ist die Vielzahl zweiter Bauteile 3 zwischen der Ringdichtung 32 angeordnet, wohingegen sich die ersten Bauteile 2 noch teilweise außerhalb der Ringdichtung 32 angeordnet sind.

Gemäß dem vorliegenden Ausführungsbeispiel sind die ersten Bauteile 2 und die zweiten Bauteile 3 jeweils mit einem Verbindungselement 26 verbunden. Der Einfachheit und Übersichtlichkeit halber sind nur einige Verbindungselemente 26 mit einem Bezugszeichen versehen. Ferner sind die Verbindungselemente 26 mit dem gleichen Bezugszeichen versehen, da diese in diesem Ausführungsbeispiel alle gleich ausgebildet sind.

Wie ferner hier gezeigt ist, sind die Verbindungselemente 26, welche die ersten Bauteile 2 miteinander verbinden, gestaucht, wenn die Spreizanordnung 1 zu einem Ring gestaltet ist. Ferner sind die Verbindungselemente 26, welche die zweiten Bauteile 3 miteinander verbinden, gestreckt, wenn die Spreizanordnung 1 zu einem Ring gestaltet ist. Mit Hilfe der Verbindungselemente 26 kann somit die Zunahme bzw. Abnahme der Radien kompensiert werden, wenn die miteinander verbundenen ersten und zweiten Bauteile 2, 3 zum Ring verbunden sind bzw. in der Ringdichtung 32 eingesetzt sind.

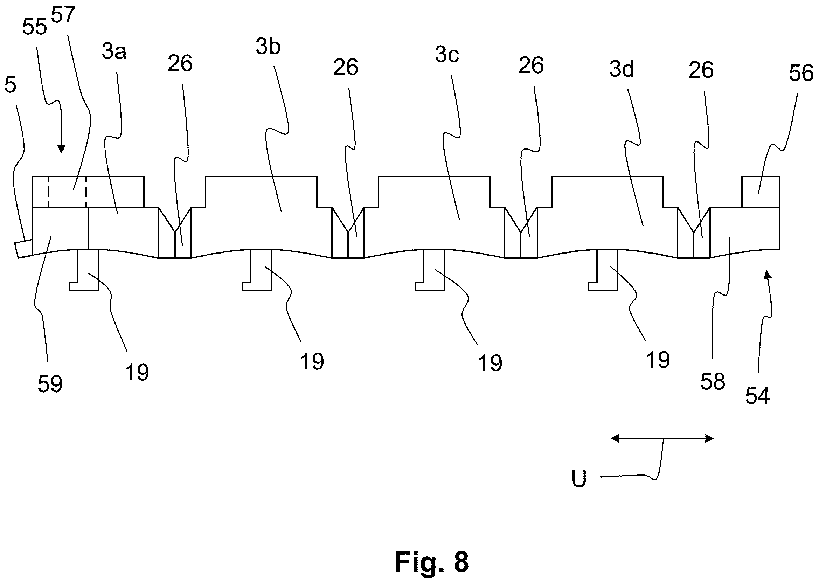

Figur 8 zeigt eine schematische Vorderansicht auf mehrere zweite Bauteile 3a - 3d mit einer Koppeleinrichtung. Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein. Mit Hilfe der Koppeleinrichtung können mehrere hier gezeigte zweite Bauteile 3a - 3d aneinandergefügt werden, so dass die Spreizanordnung 1 beliebig vergrößert werden kann. Mit Hilfe der Koppeleinrichtung kann die Spreizanordnung 1 auf einfache Weise an einen nahezu beliebigen Rohr- und/oder Wandbohrungsdurchmesser angepasst werden. Gemäß dem vorliegenden Ausführungsbeispiel sind vier zweite Bauteile 3a - 3d mittels den elastischen Verbindungselementen 26 miteinander verbunden. Die hier vier gezeigten zweiten Bauteile 3a - 3d weisen eine Koppeleinrichtung auf, so dass jeweils vier zweite Bauteile 3a - 3d miteinander verbunden werden können. Mit Hilfe der Koppeleinrichtung können die zweiten Bauteile 3a - 3d in Umfangsrichtung U aneinandergefügt werden.

Die Koppeleinrichtung umfasst hier ein erstes Koppelelement 54 und ein zweites Koppelelement 55. Das erste Koppelelement 54 mehrerer zweiter Bauteile 3a - 3d kann mit dem zweiten Koppelelement 55 einer weiteren, hier nicht gezeigten, Vielzahl zweiter Bauteile 3a - 3d gekoppelt werden.

Gemäß dem vorliegenden Ausführungsbeispiel weist das erste Koppelelement 54 einen Zapfen 56 auf, welcher hier an einem Fortsatz 58 des ersten Koppelelements 54 angeordnet ist. Das zweite Koppelelement 55 weist ein zum Zapfen 56 korrespondierendes Zapfenloch 57 auf. In das Zapfenloch 57 kann der Zapfen 56 eingeführt werden. Das zweite Koppelelement 55 weist ferner eine Aussparung 59 auf, in die der Fortsatz 58 zumindest teilweise angeordnet werden kann.

Gemäß dem vorliegenden Ausführungsbeispiel weisen vier zweite Bauteile 3a - 3d die Koppeleinrichtung, insbesondere das erste und zweite Koppelelement 54, 55, auf. Die Koppeleinrichtung kann auch an lediglich einem zweiten Bauteil 3a - 3d oder an zwei zweiten Bauteilen 3a - 3d angeordnet sein. Auch mehrere miteinander verbundene zweite Bauteile 3a - 3d sind denkbar, welche die Koppeleinrichtung aufweisen.

Die Koppeleinrichtung ist hier anhand der zweiten Bauteile 3a - 3d gezeigt. Zusätzlich oder alternativ können auch die ersten Bauteile 2a - 2d die hier gezeigte Koppeleinrichtung aufweisen. Zusätzlich oder alternativ können die ersten und/oder zweiten Bauteile 2, 3 auch zwei in Axialrichtung X voneinander beabstandete Koppeleinrichtungen aufweisen. Dadurch können die ersten und/oder zweiten Bauteile 2, 3 stabil miteinander gekoppelt werden.

Das erste Koppelelement 54 kann auch mit dem zweiten Koppelelement 55 verklipst werden, so dass beide Koppelelemente 54, 55 fest miteinander verbunden werden können.

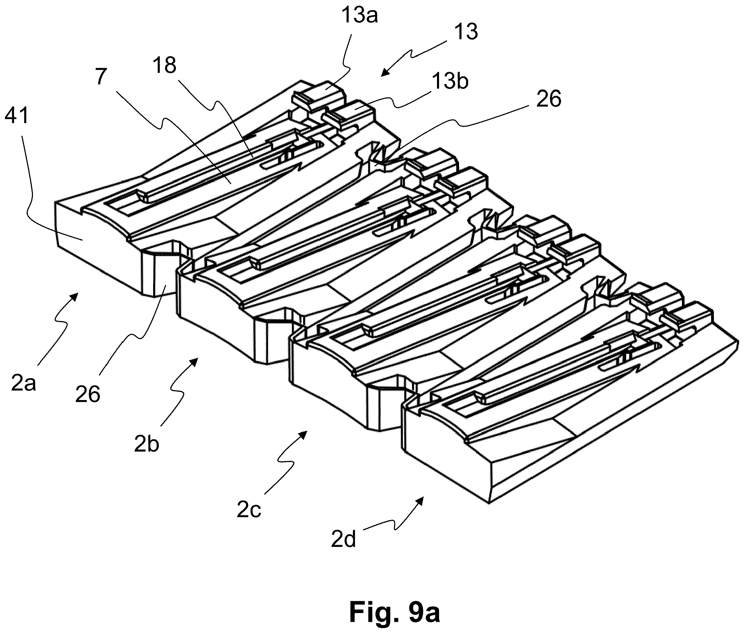

Figuren 9a - 9e zeigen verschiedene Ansichten von ersten Bauteilen 2a - 2d. Der Einfachheit halber werden Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. Der Übersichtlichkeit halber sind des Weiteren nicht mehr alle Merkmale mit einem Bezugszeichen versehen. Insbesondere werden für gleiche Merkmale auf die Bezugszeichen der Übersichtlichkeit halber weitestgehend verzichtet. Für eine detailliertere Beschreibung der ersten Bauteile 2a - d sei auf Figur 2a verwiesen. So können beispielsweise Merkmale der Übersichtlichkeit halber auch erst in den folgenden Figuren beschrieben sein.

Figur 9a zeigt eine perspektivische Ansicht auf vier erste Bauteile 2a - d. Der Übersichtlichkeit halber sind lediglich einige Merkmale mit einem Bezugszeichen an lediglich einem ersten Bauteil 2 versehen. Da alle ersten Bauteile 2 gleich sind, sind auch deren Merkmale gleich.

Jeweils zwei benachbarte erste Bauteile 2a - d sind mittels den Verbindungselementen 26 miteinander verbunden. Ferner sind die Verbindungselemente 26 auch in Axialrichtung X beabstandet, so dass die ersten Bauteile 2a - d an wie in Axialrichtung X voneinander beabstandeten Punkten miteinander verbunden sind.

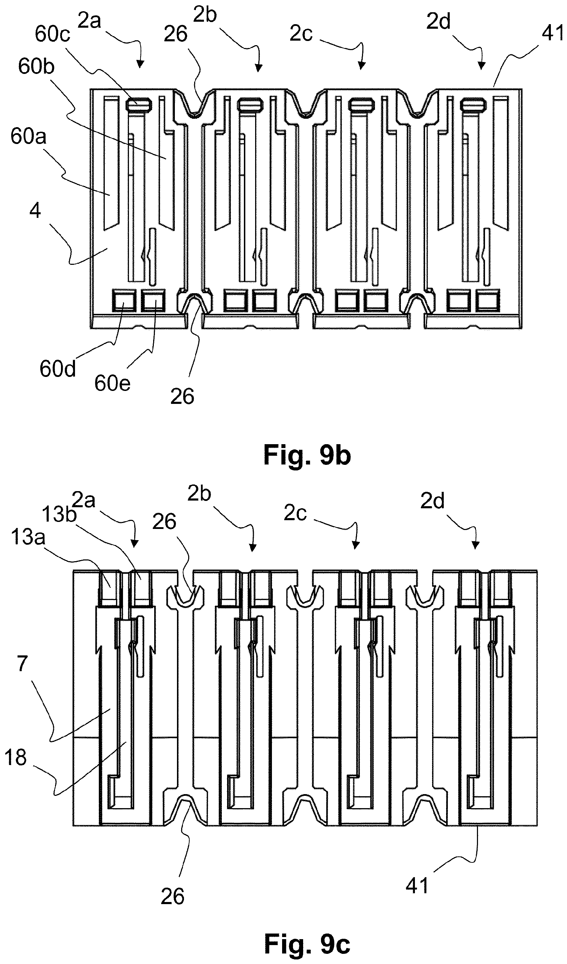

Figur 9b zeigt eine Ansicht von unten, d.h. auf die Innenanpressfläche 4, der ersten Bauteile 2a - d. Die ersten Bauteile 2a - d weisen gemäß dem vorliegenden Ausführungsbeispiel jeweils zumindest einen Schlitz 60a - e auf. Mit Hilfe der Schlitze 60 kann Gewicht eingespart werden. Im Bereich der Schlitze 60d - e sind die beiden zweiten Spreizelemente 13a, b angeordnet.

Figur 9c zeigt eine Ansicht von oben, also beispielsweise auf die erste Spreizschräge 7, auf die ersten Bauteile 2a - d.

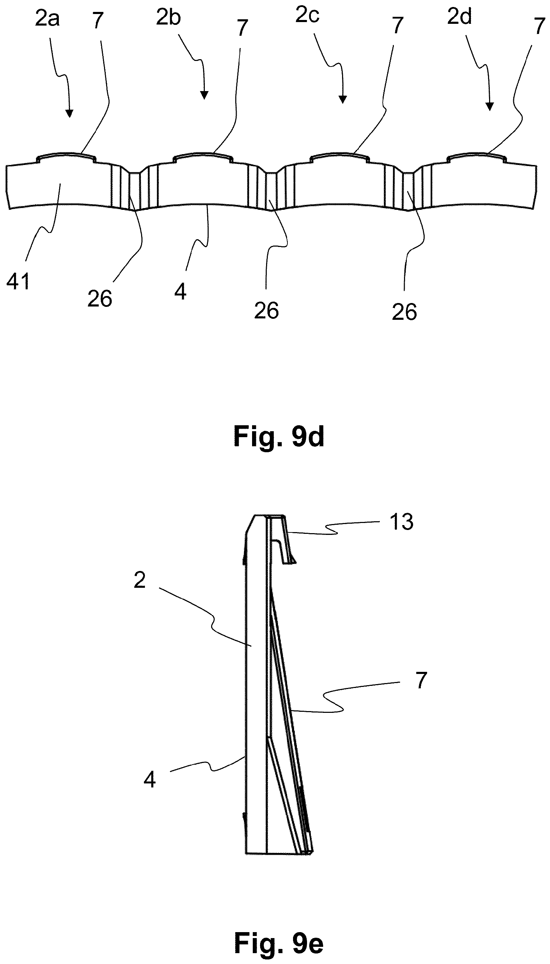

Figur 9d zeigt eine Ansicht von vorne, d.h. auf die Schlagfläche 41, der ersten Bauteile 2a - d.

Figur 9e zeigt eine Ansicht von der Seite auf zumindest ein erstes Bauteil 2.

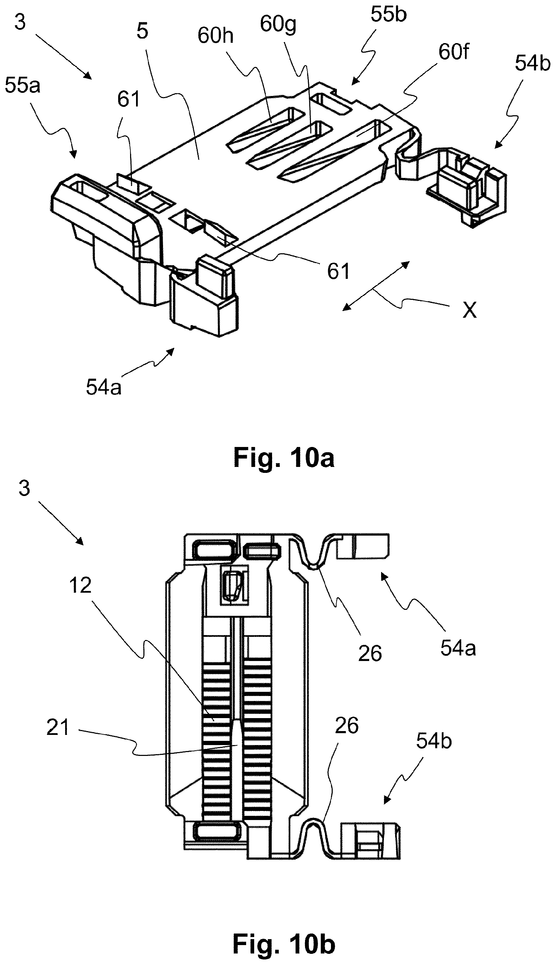

Figuren 10a - d zeigen mehrere Ansichten eines zweiten Bauteils 3. Der Einfachheit halber werden Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. Der Übersichtlichkeit halber sind des Weiteren nicht mehr alle Merkmale mit einem Bezugszeichen versehen. Insbesondere werden für im Vergleich zu vorangegangenen und/oder nachfolgenden Figuren gleiche Merkmale auf die Bezugszeichen der Übersichtlichkeit halber weitestgehend verzichtet. Für eine detailliertere Beschreibung des zweiten Bauteils 3 sei auf Figur 2b verwiesen. So können beispielsweise Merkmale der Übersichtlichkeit halber auch erst in den folgenden Figuren beschrieben sein.

Figur 10a zeigt eine perspektivische Ansicht von schräg oben, d.h. auf die Außenanpressfläche 5, des zweiten Bauteils 3. In der Außenanpressfläche 5 sind Schlitze 60f - h angeordnet. Mittels den Schlitzen 60f - h kann Gewicht eingespart werden.

An dem einen zweiten Bauteil 3 ist zumindest ein erstes Koppelelement 54 angeordnet. Das vorliegende Ausführungsbeispiel weist zwei erste Koppelelemente 54a, b auf, die in Axialrichtung X voneinander beabstandet sind. Ferner weist das zweite Bauteil 3 zumindest ein zweites Koppelelement 55 auf. Das vorliegende Ausführungsbeispiel weist zwei zweite Koppelelemente 55a, b auf, die in Axialrichtung X voneinander beabstandet sind. Mit Hilfe der ersten und zweiten Koppelelemente 54a, b und 55a, b können beliebig viele zweite Bauteile 3 aneinandergekoppelt werden. Dazu werden die ersten Koppelelemente 54a, 54b eines zweiten Bauteils 3 mit zweiten Koppelelementen 55a, b eines weiteren zweiten Bauteils 3 gekoppelt. Die durch das zumindest eine erste und zweite Koppelelement 54, 55 gebildete Koppeleinrichtung ist näher in Figur 8 beschrieben. In und/oder an der Außenanpressfläche ist zumindest ein Hakenelement 61 angeordnet, mittels dem das zweite Bauteil 3 mit der Ringdichtung 32 und insbesondere der darin angeordneten Einkerbung 47 verhakt werden kann.

Figur 10b zeigt eine Ansicht des zweiten Bauteils 3 von unten, d.h. auf die zweite Spreizschräge 12. Das zumindest eine erste Koppelelement 54a, b ist an einem Verbindungselement 26 angeordnet. Die zweite Spreizschräge 12 ist hier ferner als gezackte Rastfläche ausgebildet.

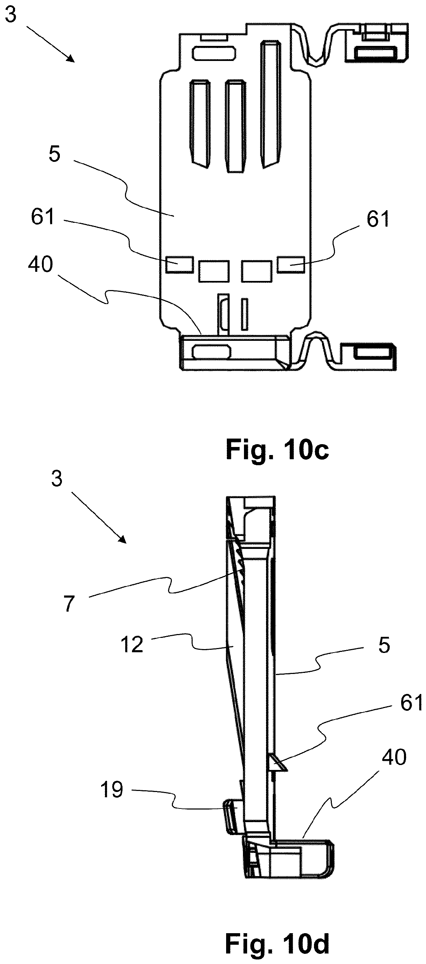

Figur 10c zeigt eine Draufsicht auf das zweite Bauteil 3, d.h. auf die Außenanpressfläche 5.

Figur 10d zeigt eine Ansicht von der Seite auf das zweite Bauteil 3.

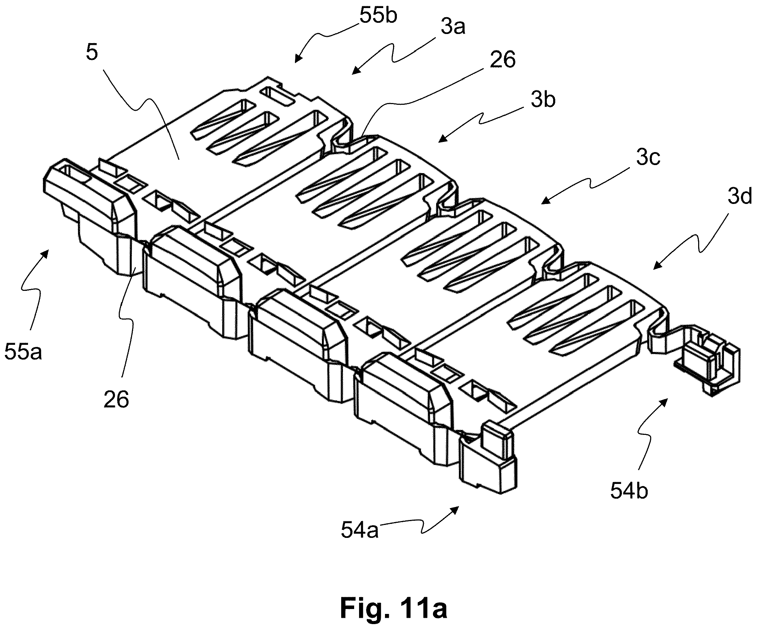

Die Figuren 11a - c zeigen Ansichten mehrerer zweiter Bauteile 3. Der Einfachheit halber werden Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. Der Übersichtlichkeit halber sind des Weiteren nicht mehr alle Merkmale mit einem Bezugszeichen versehen. Insbesondere werden für im Vergleich zu vorangegangenen und/oder nachfolgenden Figuren gleiche Merkmale auf die Bezugszeichen der Übersichtlichkeit halber weitestgehend verzichtet. Für eine detailliertere Beschreibung der zweiten Bauteile 3a - d sei auf Figur 2b verwiesen. So können beispielsweise Merkmale der Übersichtlichkeit halber auch erst in den folgenden Figuren beschrieben sein.

Figur 11a zeigt vier miteinander verbundene zweite Bauteile 3a - d. Die zweiten Bauteile 3a - d sind wieder mit den elastischen Verbindungselementen 26 verbunden. Hier weisen die vier zweiten Bauteile 3a - d das zumindest eine erste und zweite Koppelelement 54, 55 auf. Es können jeweils vier zweite Bauteile 3a - d miteinander gekoppelt werden, so dass beliebig viele zweite Bauteile 3a - d miteinander verbunden werden können.

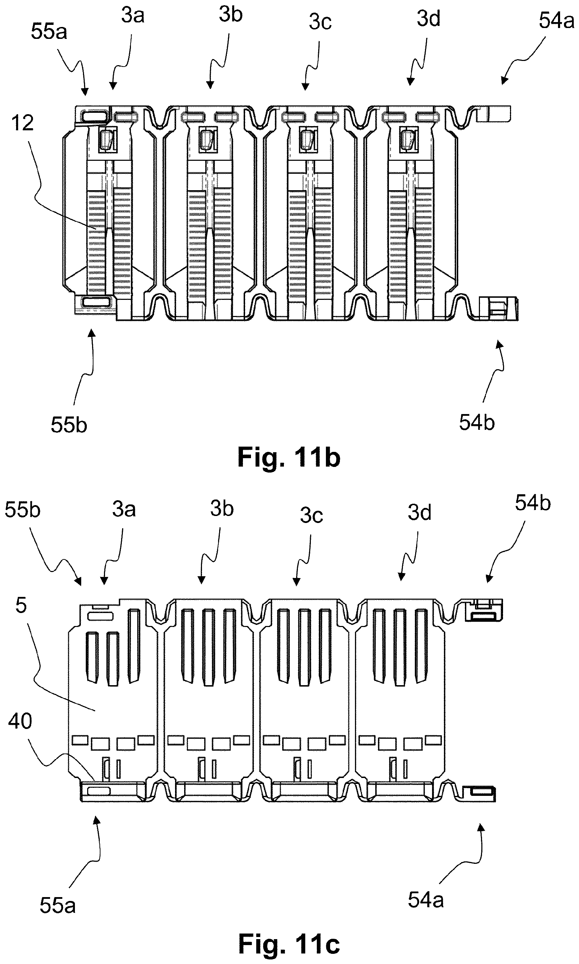

Figur 11b zeigt eine Ansicht von unten, d.h. auf die zweiten Spreizschrägen 12, auf die vier zweiten Bauteile 3a - d.

Figur 11c zeigt eine Ansicht von oben, d.h. auf die Außenanpressfläche 5, auf die vier zweiten Bauteile 3a - d.

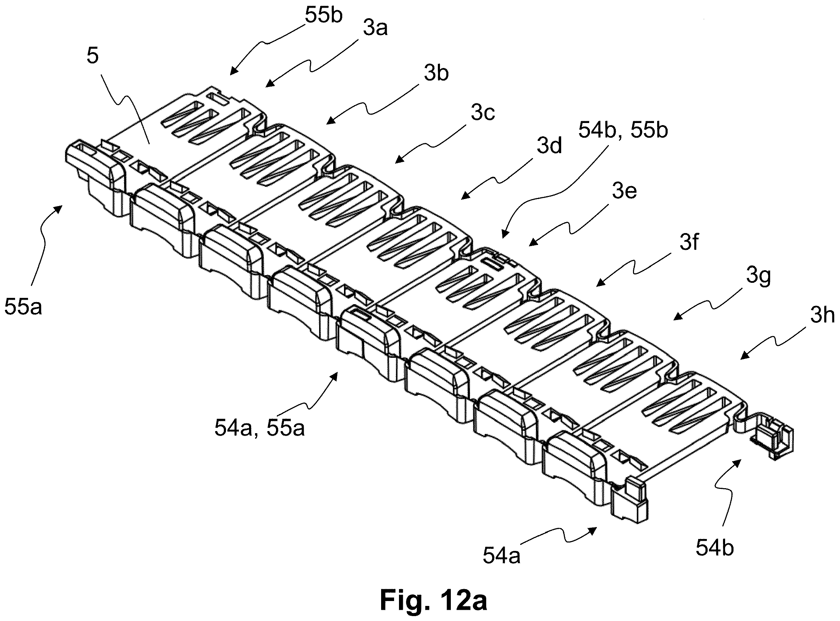

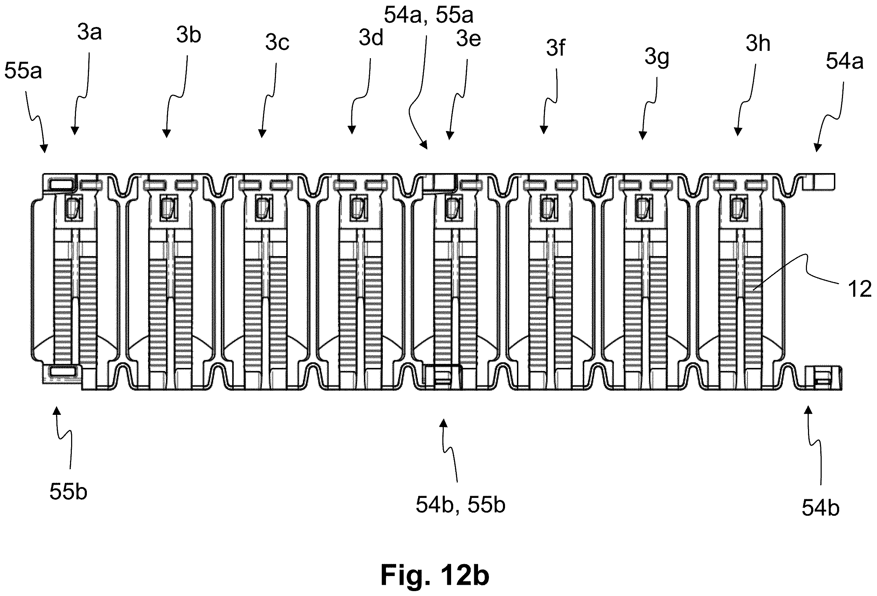

Die Figuren 12a, b zeigen mehrere Ansichten von miteinander gekoppelten zweiten Bauteilen 3a - h. Der Einfachheit halber werden Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. Der Übersichtlichkeit halber sind des Weiteren nicht mehr alle Merkmale mit einem Bezugszeichen versehen. Insbesondere werden für im Vergleich zu vorangegangenen und/oder nachfolgenden Figuren gleiche Merkmale auf die Bezugszeichen der Übersichtlichkeit halber weitestgehend verzichtet. Für eine detailliertere Beschreibung der zweiten Bauteile 3a - h sei auf Figur 2b verwiesen. So können beispielsweise Merkmale der Übersichtlichkeit halber auch erst in den folgenden Figuren beschrieben sein.

Figur 12a zeigte eine perspektivische Ansicht auf mehrere zweite Bauteile 3a - h. Gemäß dem vorliegenden Ausführungsbeispiel bilden die ersten vier zweiten Bauteile 3a - d eine erste Gruppe zweiter Bauteile 3 und die zweiten vier zweiten Bauteile 3e - h eine zweite Gruppe zweiter Bauteile 3 (vgl. Figur 11a). Zwischen dem vierten zweiten Bauteil 3d und dem fünften zweiten Bauteil 3e sind die beiden Gruppen miteinander verbunden. Das zumindest eine erste und eine zweite Koppelelement 54a, 54b, 55a, 55b sind miteinander gekoppelt. Natürlich kann auch ein einzelnes zweites Bauteil 3 angekoppelt werden, wie es beispielsweise in Figur 10a - d gezeigt ist. Die Gruppe aus zweiten Bauteilen 3 kann ferner beliebig viele zweite Bauteile 3 aufweisen.

Figur 12b zeigt eine Ansicht von unten, d.h. auf die zweiten Spreizschrägen 12, auf die mehreren zweiten Bauteile 3a - h.

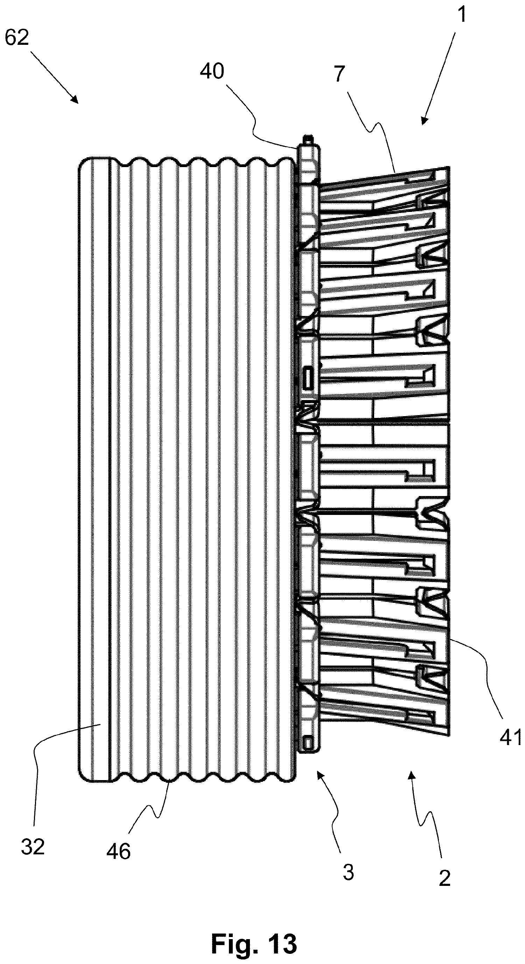

Die Figur 13 zeigt eine Ansicht einer Dichtungsanordnung 62. Der Einfachheit halber werden Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. Der Übersichtlichkeit halber sind des Weiteren nicht mehr alle Merkmale mit einem Bezugszeichen versehen. Insbesondere werden für im Vergleich zu vorangegangenen und/oder nachfolgenden Figuren gleiche Merkmale auf die Bezugszeichen der Übersichtlichkeit halber weitestgehend verzichtet. Für eine detailliertere Beschreibung der ersten Bauteile 2 und der zweiten Bauteile 3 sei auf Figur 2a bzw. 2b sowie die Figuren 9 - 12 verwiesen. So können beispielsweise Merkmale der Übersichtlichkeit halber auch erst in den folgenden Figuren beschrieben sein.

Die Spreizanordnung 1 ist in der Ringdichtung 32 zumindest teilweise angeordnet. Die beiden Bauteile 2, 3 bzw. die Vielzahl der beiden Bauteile 2, 3 sind zueinander in der Montagestellung angeordnet. Die Spreizanordnung 1 ist ringförmig ausgebildet.

Beispielsweise kann mit einem Hammer auf die Schlagfläche 41 geschlagen werden, um die beiden Bauteile 2, 3 bzw. die Vielzahl der beiden Bauteile 2, 3 in Axialrichtung X gegeneinander zu verschieben. Das zweite Bauteile 3 bzw. die Vielzahl der zweiten Bauteile 3 steht mit den Abstützflächen 40 an der Ringdichtung 32 an. Zusätzlich oder alternativ können die Hakenelemente 61 der zweiten Bauteile 3 (vgl. beispielsweise Figur 10a) in die Einkerbung 47 der Ringdichtung 32 eingreifen, so dass das zweite Bauteil 3 bzw. die Vielzahl der zweiten Bauteile 3 gegenüber der Ringdichtung 32 fixiert ist. Mittels der Drucckraft durch den oder die Hammerschläge auf die Schlagfläche 41 wird das erste Bauteil 2 bzw. die Vielzahl der ersten Bauteile 2 unter die zweiten Bauteile 3 getrieben. Beide Bauteile 2, 3 verschieben sich in Axialrichtung X gegeneinander von der Montagestellung in die Spreizstellung. Die Druckkraft kann dabei natürlich auch von einem Aktor, beispielsweise einem hydraulischen Aktor, kommen. Die ersten Bauteile 2 werden somit unter die zweiten Bauteile 3 gepresst.

Wenn sich die beiden Bauteile 2, 3 in Richtung Spreizstellung gegeneinander verschieben, erhöht sich der radiale Abstand A zwischen Innen- und Außenanpressfläche 4, 5. Die Ringdichtung 32 wird dann auf das Rohr 30 und/oder von innen gegen die Wandbohrung 29 gepresst. Der Ringspalt 31 wird dadurch abgedichtet.

Ferner sei noch angemerkt, dass bei den Zeichnungen der Einfachheit und/oder der Übersichtlichkeit halber Merkmale und deren Wirkungen in unterschiedlichen Figuren beschrieben sein können. Insbesondere sind in den Figuren 3 - 13 der Einfachheit und/oder Übersichtlichkeit halber nicht mehr alle Merkmale nochmals mit einem Bezugszeichen versehen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spreizanordnung
- 2: erstes Bauteil
- 3: zweites Bauteil
- 4: Innenanpressfläche
- 5: Außenanpressfläche
- 6: erster Spreizmechanismus
- 7: erste Spreizschräge
- 8: erstes Spreizelement
- 9: erster Abschnitt
- 10: zweiter Abschnitt
- 11: zweiter Spreizmechanismus
- 12: zweite Spreizschräge
- 13: zweites Spreizelement
- 14: erster Abstützbereich
- 15: zweiter Abstützbereich
- 16: dritter Abschnitt
- 17: vierter Abschnitt
- 18: erste Axialführungsnut
- 19: erstes Führungselement
- 20: zweite Axialführungsnut
- 21: zweites Führungselement
- 22: erste Hinterschneidung
- 23: zweite Hinterschneidung
- 24: Einführbereich
- 25: Rastelement
- 26: Verbindungselemente
- 27: Freiräume
- 28: Wand
- 29: Wandbohrung
- 30: Rohr
- 31: Ringspalt
- 32: Ringdichtung
- 33: Hohlraum
- 34: erster Schenkel
- 35: zweiter Schenkel
- 36: Öffnung
- 37: erste Stirnseite
- 38: zweite Stirnseite
- 39: Durchführung
- 40: Abstützfläche
- 41: Schlagfläche
- 42: erster Durchbruch
- 43: zweiter Durchbruch
- 44: erstes Ende
- 45: zweites Ende
- 46: Rippen
- 47: Einkerbung
- 48: erste Umrandungsfläche
- 49: zweite Umrandungsfläche
- 50: Verriegelungsmechanismus
- 51: Verriegelungselement
- 52: Federelement
- 53: Ausnehmung
- 54: erstes Koppelelement
- 55: zweites Koppelelement
- 56: Zapfen
- 57: Zapfenloch
- 58: Fortsatz
- 59: Aussparung
- 60: Schlitz
- 61: Hakenelement
- 62: Dichtungsanordnung

- A: radialer Abstand
- X: Axialrichtung
- R: Radialrichtung
- U: Umfangsrichtung
- α: erster Winkel
- β: zweiter Winkel
- H1: erste Höhe
- H2: zweite Höhe
- V: Versatz

## Patentansprüche

1. Spreizanordnung (1) für eine Ringdichtung (32) zum Abdichten eines Ringspalts (31)
mit einem radial inneren ersten Bauteil (2), das eine Innenanpressfläche (4) aufweist,
mit einem radial äußeren zweiten Bauteil (3), das eine Außenanpressfläche (5) aufweist, und
mit einem zwischen diesen beiden Bauteilen (2, 3) ausgebildeten ersten Spreizmechanismus (6),
der eine an einem der beiden Bauteile (2, 3) ausgebildete erste Spreizschräge (7) und ein am anderen Bauteil (2, 3) ausgebildetes, entlang der ersten Spreizschräge (7) bewegbares erstes Spreizelement (8) umfasst,
wobei die beiden Bauteile (2, 3) relativ zueinander in Axialrichtung (X) der Spreizanordnung (1) aus einer Montagestellung in eine Spreizstellung verschiebbar sind,
wodurch das erste Spreizelement (8) von einem ersten Abschnitt (9) der ersten Spreizschräge (7) in einen zweiten Abschnitt (10) der Spreizschräge (7) verschoben wird und
hierdurch ein radialer Abstand (A) zwischen der Innenanpressfläche (4) und der Außenanpressfläche (5) vergrößert wird,
**dadurch gekennzeichnet,**
**dass** die Spreizanordnung (1) einen zwischen diesen beiden Bauteilen (2, 3) ausgebildeten zweiten Spreizmechanismus (11) aufweist, dass der zweite Spreizmechanismus (11) eine an einem der beiden Bauteile (2, 3) ausgebildete zweite Spreizschräge (12) und ein am anderen Bauteil (2, 3) ausgebildetes, entlang der zweiten Spreizschräge (12) bewegbares zweites Spreizelement (13) umfasst und
**dass** die beiden Spreizmechanismen (6, 11) zueinander in Axialrichtung (X) der Spreizanordnung (1) versetzt sind.

2. Spreizanordnung nach dem vorherigen Anspruch, **dadurch gekennzeichnet, dass** die beiden Spreizmechanismen (6, 11) voneinander getrennt sind und/oder dass die beiden Spreizmechanismen (6, 11) zueinander in Radialrichtung (R) der Spreizanordnung (1) versetzt sind.

3. Spreizanordnung nach einem oder mehreren der vorherigen Ansprüche, **dadurch gekennzeichnet, dass** die Innenanpressfläche (4) und die Außenanpressfläche (5) zueinander parallel sind und/oder dass die beiden Spreizmechanismen (6, 11) derart ausgebildet sind, dass die Innenanpressfläche (4) und die Außenanpressfläche (5) zueinander parallelverschiebbar sind.

4. Spreizanordnung nach einem oder mehreren der vorherigen Ansprüche, **dadurch gekennzeichnet, dass** eines der beiden Bauteile (2, 3) die beiden Spreizschrägen (7, 12) und das andere der beiden Bauteile (2, 3) die beiden Spreizelemente (8, 13) aufweist oder
dass jeweils eines der beiden Bauteile (2, 3) die Spreizschräge (7, 12) des einen Spreizmechanismus (6, 11) und das Spreizelement (8, 13) des anderen Spreizmechanismus (6, 11) aufweist.

5. Spreizanordnung nach einem oder mehreren der vorherigen Ansprüche, **dadurch gekennzeichnet, dass** die Spreizschrägen (7, 12) und/oder die Spreizelemente (8, 13) der beiden Spreizmechanismen (6, 11) zueinander in Axial- und/oder Radialrichtung (X, R) der Spreizanordnung (1) versetzt sind und/oder dass die Spreizschrägen (7, 12) der beiden Spreizmechanismen (6, 11) zueinander parallelversetzt sind.

6. Spreizanordnung nach einem oder mehreren der vorherigen Ansprüche, **dadurch gekennzeichnet, dass** die Spreizanordnung (1) einen zwischen den beiden Bauteilen (2, 3) ausgebildeten ersten und/oder zweiten Führungsmechanismus aufweist, um die beiden Bauteile (2, 3) in Axialrichtung (X) der Spreizanordnung (1) zueinander bewegbar zu führen, wobei vorzugsweise der erste und zweite Führungsmechanismus zueinander in Axialrichtung (X) der Spreizanordnung (1) versetzt sind, so dass die beiden Bauteile (2, 3) in Axialrichtung (X) an zwei unterschiedlichen Orten geführt sind und/oder wobei vorzugsweise der Führungsmechanismus eine Axialführungsnut (18, 20) und ein in der Axialführungsnut (18, 20) geführtes Führungselement (19, 21) umfasst.

7. Spreizanordnung nach dem vorherigen Anspruch, **dadurch gekennzeichnet, dass** das Führungselement (19, 21) an seinem freien Ende eine sich in Umfangsrichtung (U) der Spreizanordnung (1) erstreckende erste Hinterschneidung (22) aufweist, die derart formschlüssig in eine korrespondierende zweite Hinterschneidung (23) der Axialführungsnut (18, 20) eingreift, dass die beiden Bauteile (2, 3) in Radialrichtung (R) der Spreizanordnung (1) formschlüssig miteinander gekoppelt sind.

8. Spreizanordnung nach einem oder mehreren der vorherigen Ansprüche 6 und 7, **dadurch gekennzeichnet, dass** sich die Axialführungsnut (18, 20) im Bereich eines ihrer beiden axialen Enden verbreitert, so dass die erste Hinterschneidung (22) des Führungselements (19, 21) zur Montage der Spreizanordnung (1) in Radialrichtung (R) in die Axialführungsnut (18, 20) eingeführt werden kann.

9. Spreizanordnung nach einem oder mehreren der vorherigen Ansprüche 6 - 8, **dadurch gekennzeichnet, dass** eine erste Axialführungsnut (18) des ersten Führungsmechanismus in der ersten Spreizschräge (7) ausgebildete ist und/oder
dass ein erstes Führungselement (19) des ersten Führungsmechanismus am ersten Spreizelement (8) ausgebildet ist, wobei vorzugsweise das erste Führungselement (19) als radialer Fortsatz am ersten Spreizelement (8) ausgebildet ist.

10. Spreizanordnung nach einem oder mehreren der vorherigen Ansprüche 6 - 9, **dadurch gekennzeichnet, dass** eine zweite Axialführungsnut (20) des zweiten Führungsmechanismus in dem zweiten Spreizelement (13) ausgebildete ist und/oder
dass ein zweites Führungselement (21) des zweiten Führungsmechanismus in der zweiten Spreizschräge (12) ausgebildete ist.

11. Spreizanordnung nach einem oder mehreren der vorherigen Ansprüche, **dadurch gekennzeichnet, dass** die Spreizanordnung (1) einen Rastmechanismus umfasst, der ein axiales Verschieben der beiden Bauteile (2, 3) in Richtung der Montagestellung sperrt, wobei der Rastmechanismus vorzugsweise eine gezackte Rastfläche und ein mit der Rastfläche korrespondierendes elastisches Rastelement (25) umfasst, wobei vorzugsweise die gezackte Rastfläche in der zweiten Spreizschräge (12) ausgebildet ist und/oder
wobei vorzugsweise das elastische Rastelement (25) an dem zweiten Spreizelement (13) ausgebildet ist.

12. Spreizanordnung nach einem oder mehreren der vorherigen Ansprüche, **dadurch gekennzeichnet, dass** zumindest die beiden miteinander korrespondierenden Bauteile (2, 3) mit ihren beiden Spreizmechanismen (6, 11) eine Spreizeinheit bilden und
dass die Spreizanordnung (1) mehrere in Umfangsrichtung verteilte Spreizeinheiten umfasst, die einen Spreizring bilden, wobei der Spreizring vorzugsweise durch einen die ersten Bauteile (2) umfassenden Innenspreizring und/oder einen die zweiten Bauteile (3) umfassenden Außenspreizring ausgebildet ist.

13. Spreizanordnung nach einem oder mehreren der vorherigen Ansprüche, **dadurch gekennzeichnet, dass** zwischen zwei in Umfangsrichtung (U) benachbarten ersten und/oder zweiten Bauteilen (2, 3) zweier benachbarter Spreizeinheiten ein Freiraum (27) ausgebildet ist, so dass diese zueinander in Umfangsrichtung (U) bewegbar sind, und/oder dass die in Umfangsrichtung (U) benachbarten Bauteile (2, 3) über zumindest ein flexibles Verbindungselement (26) verbunden sind, das den Freiraum (27) überbrückt.

14. Dichtungsanordnung (62) zum Abdichten eines Ringspalts (31) zwischen einer Wandbohrung (29) und einem im Inneren der Wandbohrung (29) angeordneten Körper
mit einer Ringdichtung (32) und
einer Spreizanordnung (1) zum radialen Verpressen der Ringdichtung (32),
**dadurch gekennzeichnet,**
**dass** die Spreizanordnung (1) nach einem oder mehreren der vorherigen Ansprüche ausgebildet ist.

15. Dichtungsanordnung nach dem vorherigen Anspruch, **dadurch gekennzeichnet, dass** die Ringdichtung (21) einen ringförmigen Hohlraum (33) aufweist, in dem die Spreizanordnung (1) zumindest teilweise angeordnet ist, und/oder dass die Ringdichtung (32) einen U-förmigen Querschnitt und/oder an einer ihrer Stirnseiten (37, 38) eine Öffnung (36) aufweist.

## Claims

1. A spreader structure (1) for a ring seal (32) for sealing an annular gap (31),
comprising a radially inner first component (2) with an inner contact surface (4),
a radially outer second component (3) with an outer contact surface (5), and
a first spreading mechanism (6) formed between these two components (2, 3)
that comprises a first spreading bevel (7) formed on one of the two components (2, 3), and a first spreading element (8) formed on the other component (2, 3), that can be moved along the first spreading bevel (7),
wherein the two components (2, 3) can be displaced in relation to one another in the axial direction (X) of the spreader structure (1) from an assembly state to a spreading state,
by means of which the first spreading element (8) is moved from a first section (9) of the first spreading bevel (7) to a second section (10) of the spreading bevel (7), and
enlarging a radial spacing (A) between the inner contact surface (4) and the outer contact surface (5),
**characterized in that**
the spreader structure (1) has a second spreading mechanism (11) formed between these two components (2, 3),
the second spreading mechanism (11) comprises a second spreading bevel (12) formed on one of the two components (2, 3) and a second spreading element (13) formed on the other component (2, 3) that can move along the second spreading bevel (12)
and the two spreading mechanisms (6, 11) are offset to one another in the axial direction (X) of the spreader structure (1).

2. The spreader structure according to the preceding claim, **characterized in that** the two spreading mechanisms (6, 11) are separated from one another and/or the two spreading mechanisms (6, 11) are offset to one another in the radial direction (R) of the spreader structure (1).

3. The spreader structure according to any one or more of the preceding claims, **characterized in that** the inner contact surface (4) and the outer contact surface (5) are parallel to one another, and/or the two spreading mechanisms (6, 11) are formed such that the inner contact surface (4) and the outer contact surface (5) can be displaced in parallel to one another.

4. The spreader structure according to any one or more of the preceding claims, **characterized in that** one of the two components (2, 3) contains the two spreading bevels (7, 12) and the other component (2, 3) contains the two spreading elements (8, 13), or
each of the two components (2, 3) contains a spreading bevel (7, 12) of one of the spreading mechanisms (6, 11) and a spreading element (8, 13) of the other spreading mechanism (6, 11).

5. The spreader structure according to any one or more of the preceding claims, **characterized in that** the spreading bevels (7, 12) and/or the spreading elements (8, 13) of the two spreading mechanisms (6, 11) are offset to one another in the axial and/or radial directions (X, R) of the spreader structure (1) and/or the spreading bevels (7, 12) of the two spreading mechanisms (6, 11) are offset parallel to one another.

6. The spreader structure according to any one or more of the preceding claims, **characterized in that** the spreader structure (1) has a first and/or second guide mechanism formed between the two components (2, 3), in order to guide the two components (2, 3) in the axial direction (X) of the spreader structure (1), such that they move in relation to one another, wherein preferably the first and second guide mechanisms are offset to one another in the axial direction (X) of the spreader structure (1), such that the two components (2, 3) are guided to two different places in the axial direction (X) and/or wherein preferably the guide mechanisms comprise an axial guide groove (18, 20) and a guide element (19, 21) that moves in the axial guide groove (18, 20).

7. The spreader structure according to the preceding claim, **characterized in that** the guide element (19, 21) has a first undercut (22) at its free end that extends in the circumferential direction (U) of the spreader structure (1), which engages in a form fit in a corresponding second undercut (23) in the axial guide groove (18, 20), such that the two components (2, 3) are coupled in a form fit to one another in the radial direction (R) of the spreader structure (1).

8. The spreader structure according to any one or more of the preceding claims 6 and 7, **characterized in that** the axial guide grooves (18, 20) widen at one of their axial ends, such that the first undercut (22) of the guide elements (19, 21) can be inserted in the radial direction (R) into the axial guide groove (18, 20) to assemble the spreader structure (1).

9. The spreader structure according to any one or more of the preceding claims 6 to 8, **characterized in that** a first axial guide groove (18) of the first guide mechanism is formed in the first spreading bevel (7), and/or a first guide element (19) of the first guide mechanism is formed on the first spreading element (8), wherein preferably the first guide element (19) forms a radial extension on the first spreading element (8).

10. The spreader structure according to any one or more of the preceding claims 6 to 9, **characterized in that** a second axial guide groove (20) of the second guide mechanism is formed in the second spreading element (13), and/or a second guide element (21) of the second guide mechanism is formed in the second spreading bevel (12).

11. The spreader structure according to any one or more of the preceding claims, **characterized in that** the spreader structure (1) comprises a latching mechanism, which blocks an axial displacement of the two components (2, 3) toward the assembly state, wherein the latching mechanism has a serrated latching surface and an elastic latching element (25) that corresponds to the latching surface, wherein preferably the serrated latching surface is formed in the second spreading bevel (12), and/or wherein preferably the elastic latching element (25) is formed on the second spreading element (13).

12. The spreader structure according to any one or more of the preceding claims, **characterized in that** at least the two corresponding components (2, 3) form a spreader unit with their two spreading mechanisms (6, 11), and
the spreader structure (1) comprises numerous spreader units distributed over the circumferential direction, which form a spreader ring, wherein the spreader ring is preferably formed by an inner spreader ring comprising the first component (2), and/or an outer spreader ring comprising the second component (3).

13. The spreader structure according to any one or more of the preceding claims, **characterized in that** an empty space (27) is formed between two adjacent first and/or second components (2, 3) of two adjacent spreader units in the circumferential direction (U), such that these can move in relation to one another in the circumferential direction (U), and/or the adjacent components (2, 3) in the circumferential direction (U) are connected via at least one flexible connecting element (26) that bridges the empty space (27).

14. A sealing assembly (62) for sealing an annular gap (31) between a wall bore hole (29) and an element in the wall bore hole (29),
comprising a ring seal (32) and
a spreader structure (1) for radially grouting the ring seal (32),
**characterized in that**
the spreader structure (1) is formed according to any one or more of the preceding claims.

15. The sealing assembly according to the preceding claim, **characterized in that** the ring seal (21) contains an annular hollow space (33), in which the spreader structure (1) is at least partially located and/or the ring seal (32) has a U-shaped cross section and/or an opening (36) at one of its end surfaces (37, 38).

## Revendications

1. Agencement d'écartement (1) pour un joint annulaire (32) destiné à étanchéifier une fente annulaire (31),
avec un premier composant (2) radialement intérieur, qui présente une surface de pression intérieure (4),
avec un deuxième composant (3) radialement extérieur, qui présente une surface de pression extérieure (5), et
avec un premier mécanisme d'écartement (6) formé entre ces deux composants (2, 3),
qui comprend un premier biseau d'écartement (7) formé sur l'un des deux composants (2, 3) et un premier élément d'écartement (8) formé sur l'autre composant (2, 3) et déplaçable le long du premier biseau d'écartement (7),
dans lequel les deux composants (2, 3) peuvent être déplacés l'un par rapport à l'autre dans la direction axiale (X) de l'agencement d'écartement (1) d'une position de montage à une position d'écartement,
ce par quoi le premier élément d'écartement (8) est déplacé d'une première section (9) du premier biseau d'écartement (7) dans une deuxième section (10) du biseau d'écartement (7) et,
de ce fait, une distance radiale (A) entre la surface de pression intérieure (4) et la surface de pression extérieure (5) est agrandie,
**caractérisé en ce que**
l'agencement d'écartement (1) présente un deuxième mécanisme d'écartement (11) formé entre ces deux composants (2, 3),
**en ce que** le deuxième mécanisme d'écartement (11) comprend un deuxième biseau d'écartement (12) formé sur l'un des deux composants (2, 3) et un deuxième élément d'écartement (13) formé sur l'autre composant (2, 3) et déplaçable le long du deuxième biseau d'écartement (12) et
**en ce que** les deux mécanismes d'écartement (6, 11) sont décalés l'un par rapport à l'autre dans la direction axiale (X) de l'agencement d'écartement (1).

2. Agencement d'écartement selon la revendication précédente, **caractérisé en ce que** les deux mécanismes d'écartement (6, 11) sont séparés l'un de l'autre et/ou **en ce que** les deux mécanismes d'écartement (6, 11) sont décalés l'un par rapport à l'autre dans la direction radiale (R) de l'agencement d'écartement (1).

3. Agencement d'écartement selon l'une quelconque ou plusieurs des revendications précédentes, **caractérisé en ce que** la surface de pression intérieure (4) et la surface de pression extérieure (5) sont parallèles l'une à l'autre et/ou
**en ce que** les deux mécanismes d'écartement (6, 11) sont conçus de sorte que la surface de pression intérieure (4) et la surface de pression extérieure (5) peuvent être déplacées parallèlement l'une à l'autre.

4. Agencement d'écartement selon l'une quelconque ou plusieurs des revendications précédentes, **caractérisé en ce que** l'un des deux composants (2, 3) présente les deux biseaux d'écartement (7, 12) et l'autre des deux composants (2, 3) présente les deux éléments d'écartement (8, 13) ou
**en ce que** respectivement l'un des deux composants (2, 3) présente le biseau d'écartement (7, 12) de l'un des mécanismes d'écartement (6, 11) et l'élément d'écartement (8, 13) de l'autre mécanisme d'écartement (6, 11).

5. Agencement d'écartement selon l'une quelconque ou plusieurs des revendications précédentes, **caractérisé en ce que** les biseaux d'écartement (7, 12) et/ou les éléments d'écartement (8, 13) des deux mécanismes d'écartement (6, 11) sont décalés les uns par rapport aux autres dans la direction axiale et/ou radiale (X, R) de l'agencement d'écartement (1) et/ou **en ce que** les biseaux d'écartement (7, 12) des deux mécanismes d'écartement (6, 11) sont décalées parallèlement les uns par rapport aux autres.

6. Agencement d'écartement selon l'une quelconque ou plusieurs des revendications précédentes, **caractérisé en ce que** l'agencement d'écartement (1) comprend un premier et/ou un deuxième mécanisme de guidage formé(s) entre les deux composants (2, 3) pour guider les deux composants (2, 3) de manière mobile l'un par rapport à l'autre dans la direction axiale (X) de l'agencement d'écartement (1), dans lequel, de préférence, le premier et le deuxième mécanismes de guidage sont décalés l'un par rapport à l'autre dans la direction axiale (X) de l'agencement d'écartement (1), de sorte que les deux composants (2, 3) sont guidés dans la direction axiale (X) à deux endroits différents et/ou dans lequel, de préférence, le mécanisme de guidage comprenant une rainure de guidage axial (18, 20) et un élément de guidage (19, 21) guidé dans la rainure de guidage axial (18, 20).

7. Agencement d'écartement selon la revendication précédente, **caractérisé en ce que** l'élément de guidage (19, 21) présente à son extrémité libre une première contre-dépouille (22) s'étendant dans la direction circonférentielle (U) de l'agencement d'écartement (1), qui s'engage par complémentarité de forme dans une deuxième contre-dépouille (23) correspondante de la rainure de guidage axial (18, 20) de sorte que les deux composants (2, 3) sont couplés l'un avec l'autre par complémentarité de forme dans la direction radiale (R) de l'agencement d'écartement (1).

8. Agencement d'écartement selon l'une quelconque ou plusieurs des revendications 6 et 7 précédentes, **caractérisé en ce que** la rainure de guidage axial (18, 20) s'élargit au niveau de l'une de ses deux extrémités axiales, de sorte que la première contre-dépouille (22) de l'élément de guidage (19, 21) peut être insérée dans la rainure de guidage axial (18, 20) pour le montage de l'agencement d'écartement (1) dans la direction radiale (R).

9. Agencement d'écartement selon l'une quelconque ou plusieurs des revendications 6 à 8 précédentes, caractérisé en ce qu'une première rainure de guidage axial (18) du premier mécanisme de guidage est formée dans le premier biseau d'écartement (7) et/ou
en ce qu'un premier élément de guidage (19) du premier mécanisme de guidage est réalisé sur le premier élément d'écartement (8), dans lequel, de préférence, le premier élément de guidage (19) est réalisé sous la forme d'un prolongement radial sur le premier élément d'écartement (8).

10. Agencement d'écartement selon l'une quelconque ou plusieurs des revendications 6 à 9 précédentes, caractérisé en ce qu'une deuxième rainure de guidage axial (20) du deuxième mécanisme de guidage est formée dans le deuxième élément d'écartement (13) et/ou
en ce qu'un deuxième élément de guidage (21) du deuxième mécanisme de guidage est formé dans le deuxième biseau d'écartement (12).

11. Agencement d'écartement selon l'une quelconque ou plusieurs des revendications précédentes, **caractérisé en ce que** l'agencement d'écartement (1) comprend un mécanisme d'encliquetage qui bloque un déplacement axial des deux composants (2, 3) dans la direction de la position de montage, dans lequel le mécanisme d'encliquetage comprenant de préférence une surface d'encliquetage dentelée et un élément d'encliquetage élastique (25) correspondant à la surface d'encliquetage, dans lequel, de préférence, la surface d'encliquetage dentelée est de préférence formée dans le deuxième biseau d'écartement (12), et/ou
dans lequel, de préférence, l'élément d'encliquetage élastique (25) est formé sur le deuxième élément d'écartement (13).

12. Agencement d'écartement selon l'une quelconque ou plusieurs des revendications précédentes, caractérisé en ce qu'au moins les deux composants (2, 3) correspondant l'un à l'autre forment une unité d'écartement avec leurs deux mécanismes d'écartement (6, 11), et
en ce que l'agencement d'écartement (1) comprend plusieurs unités d'écartement réparties dans la direction circonférentielle, qui forment une bague expansible, dans lequel la bague expansible est de préférence formé par une bague expansible intérieure comprenant les premiers composants (2) et/ou une bague expansible extérieure comprenant les deuxièmes composants (3).

13. Agencement d'écartement selon l'une quelconque ou plusieurs des revendications précédentes, **caractérisé en ce qu'**un espace libre (27) est formé entre deux premiers et/ou deux deuxièmes composants (2, 3) voisins dans la direction circonférentielle (U) de deux unités d'écartement voisines, de sorte que ceux-ci peuvent être déplacés les uns par rapport aux autres dans la direction circonférentielle (U), et/ou **en ce que** les composants (2, 3) voisins dans la direction circonférentielle (U) sont reliés par au moins un élément de liaison (26) flexible, qui enjambe l'espace libre (27).

14. Agencement d'étanchéité (62) pour étanchéifier une fente annulaire (31) entre un perçage de paroi (29) et un corps disposé à l'intérieur du perçage de paroi (29),
avec un joint annulaire (32) et
un agencement d'écartement (1) pour presser radialement le joint annulaire (32),
**caractérisé en ce que**
l'agencement d'étanchéité (1) est réalisé selon l'une quelconque ou plusieurs des revendications précédentes.

15. Agencement d'étanchéité selon la revendication précédente, **caractérisé en ce que** le joint annulaire (21) présente une cavité annulaire (33) dans laquelle l'agencement d'écartement (1) est disposé au moins partiellement, et/ou **en ce que** le joint annulaire (32) présente une section transversale en forme de U et/ou une ouverture (36) sur l'une de ses faces frontales (37, 38).
